(19) Europäisches Patentamt
European Patent Office
Office européen des brevets

(11) **EP 4 502 024 A1**

(12) **EUROPEAN PATENT APPLICATION**
published in accordance with Art. 153(4) EPC

(43) Date of publication:
**05.02.2025 Bulletin 2025/06**

(21) Application number: **23779145.4**

(22) Date of filing: **28.02.2023**

(51) International Patent Classification (IPC):
*C08J 9/16* (2006.01)   *B29C 44/44* (2006.01)
*B29K 23/00* (2006.01)

(52) Cooperative Patent Classification (CPC):
**B29C 44/44; C08J 9/16**

(86) International application number:
**PCT/JP2023/007330**

(87) International publication number:
**WO 2023/189115 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.03.2022 JP 2022056618
30.03.2022 JP 2022056623
25.04.2022 JP 2022071800
31.05.2022 JP 2022088917

(71) Applicant: **JSP Corporation
Tokyo 100-0005 (JP)**

(72) Inventor: **KITAHARA, Taizo
Yokkaichi-shi, Mie 510-0881 (JP)**

(74) Representative: **Gille Hrabal
Partnerschaftsgesellschaft mbB
Patentanwälte
Brucknerstraße 20
40593 Düsseldorf (DE)**

(54) **EXPANDED BEAD PRODUCTION METHOD, AND EXPANDED BEADS**

(57)     A method for producing expanded beads having a bulk density of 10 to 240 kg/m$^3$, the method including expanding resin particles containing a mixed resin of at least two linear low-density polyethylenes as a base resin, wherein the mixed resin contains polyethylene A having a biomass degree of 50% or more and a melt flow rate (MFR) of 0.1 to 3 g/10 min and polyethylene B; a difference between the MFR of A and the MFR of B is 0 to 2 g/10 min; a mass ratio of A to B is 5/95 to 95/5; the mixed resin has a biomass degree of 5% or more; the expanded bead has a crystal structure where a melting peak intrinsic to the linear low-density polyethylene and a high-temperature peak on a higher temperature side appear on a DSC curve; and a heat of fusion at the high-temperature peak is 10 to 50 J/g.

EP 4 502 024 A1

**Description**

Technical Field

The present invention relates to a method for producing expanded beads and an expanded bead.

Background Art

A molded article of polyethylene-based resin expanded beads obtained by in-mold molding of polyethylene-based resin expanded beads is excellent in chemical resistance and shock-absorbing properties, as well as recyclability. Consequently, a molded article of polyethylene-based resin expanded beads is widely used as shock absorbing materials, heat insulating materials, various packaging materials and others, including packaging/buffering materials for electric/-electronic components, packaging/buffering materials for automobile parts, and packaging materials for other precision parts as well as food products.

In recent years, biomass plastics have been developed in an attempt to replace conventional petroleum-derived resins in order to address environmental issues such as concerns about the depletion of fossil resources such as petroleum and demands for reduction of carbon dioxide emissions.

For example, PTL1 discloses polyethylene-based resin expanded beads having a biobased content of 1% or more and containing a plant-derived polyethylene-based resin with a biobased content of 80% or more as measured according to ASTM D 6866.

Citation List

Patent Literature

PTL1: JP 2013-060514 A

Summary of Invention

Technical Problem

However, since the technology disclosed in PTL1 makes in-mold moldability of the resulting expanded beads low, it is difficult to produce good molded article of expanded beads over a wide density range.

An object of the present invention is to provide a method for producing expanded beads that have excellent in-mold moldability and can produce a molded article of polyethylene-based resin expanded beads with high biomass degree over a wide density range.

Solution to Problem

The present inventors have assiduously studied and, as a result, have found that a method for producing expanded beads by expanding resin particles containing a mixed resin containing at least two specific types of linear low-density polyethylenes as a base resin can solve above-mentioned problems.

Specifically, one aspect of the present invention relates to the method for producing expanded beads described in [1] to [7] and the expanded beads described in [8] and [9] below.

[1] A method for producing expanded beads having a bulk density of 10 kg/m$^3$ or more and 240 kg/m$^3$ or less by expanding resin particles comprising, as a base resin, a mixed resin of at least two linear low-density polyethylenes, wherein

the mixed resin comprises linear low-density polyethylene A having a biomass degree of 50% or more as measured according to ASTM D 6866 and linear low-density polyethylene B;

a melt flow rate $MFR_A$ of the linear low-density polyethylene A measured under conditions of a temperature of 190°C and a load of 2.16 kg is 0.1 g/10 min or more and 3 g/10 min or less;

a difference $|MFR_A - MFR_B|$ between the melt flow rate $MFR_A$ of the linear low-density polyethylene A and a melt flow rate $MFR_B$ of the linear low-density polyethylene B measured under conditions of a temperature of 190°C and a load of 2.16 kg is 0 g/10 min or more and 2 g/10 min or less;

a mass ratio A/B of the linear low-density polyethylene A to the linear low-density polyethylene B in the mixed resin is 5/95 to 95/5;

the mixed resin has a biomass degree of 5% or more as measured according to ASTM D 6866;
the expanded bead has a crystal structure where a melting peak intrinsic to the linear low-density polyethylene, intrinsic peak, and at least one melting peak on a higher temperature side than the intrinsic peak, high-temperature peak, appear on a DSC curve drawn by heating the expanded bead from 23°C to 200°C at a heating rate of 10°C/min; and
a heat of fusion at the high-temperature peak is 10 J/g or more and 50 J/g or less.

[2] The method for producing expanded beads according to [1], wherein the linear low-density polyethylene B has a biomass degree of 20% or less as measured according to ASTM D 6866.

[3] The method for producing expanded beads according to [1] or [2], wherein a difference $\rho_B - \rho_A$ between a density $\rho_B$ of the linear low-density polyethylene B and a density $\rho_A$ of the linear low-density polyethylene A is 3 kg/m$^3$ or more, and the mixed resin has a density of 910 kg/m$^3$ or more and 928 kg/m$^3$ or less.

[4] The method for producing expanded beads according to any one of [1] to [3], wherein a difference $\Delta H_B - \Delta H_A$ between a heat of fusion $\Delta H_B$ of the linear low-density polyethylene B and a heat of fusion $\Delta H_A$ of the linear low-density polyethylene A is 3 J/g or more, and a total heat of fusion of the mixed resin is 70 J/g or more and 120 J/g or less.

[5] The method for producing expanded beads according to any one of [1] to [4], wherein a total heat of fusion of the expanded bead is 70 J/g or more and 105 J/g or less, and a ratio of the heat of fusion at the high-temperature peak to the total heat of fusion of the expanded bead is 0.2 or more and 0.7 or less.

[6] The method for producing expanded beads according to any one of [1] to [5], wherein a melt flow rate of the mixed resin measured under conditions of a temperature of 190°C and a load of 2.16 kg is 0.1 g/10 min or more and 3 g/10 min or less.

[7] The method for producing expanded beads according to any one of [1] to [6], wherein the linear low-density polyethylene A comprises a butene component and a hexene component as copolymerization components.

[8] An expanded bead having a bulk density of 10 kg/m$^3$ or more and 240 kg/m$^3$ or less, comprising a mixed resin of at least two linear low-density polyethylenes as a base resin, wherein

the mixed resin has a density of 910 kg/m$^3$ or more and 928 kg/m$^3$ or less;
the expanded bead has a biomass degree of 5% or more as measured according to ASTM D 6866;
a melt flow rate of the expanded bead measured under conditions of a temperature of 190°C and a load of 2.16 kg is 0.1 g/10 min or more and 3 g/10 min or less;
the expanded bead has a crystal structure where a melting peak intrinsic to the linear low-density polyethylene, intrinsic peak, and at least one melting peak on a higher temperature side than the intrinsic peak, high-temperature peak, appear on a DSC curve drawn by heating the expanded bead from 23°C to 200°C at a heating rate of 10°C/min; and
a heat of fusion at the high-temperature peak is 10 J/g or more and 50 J/g or less.

[9] The expanded bead according to [8], wherein a total heat of fusion of the expanded bead is 70 J/g or more and 105 J/g or less, and a ratio of the heat of fusion at the high-temperature peak to the total heat of fusion of the expanded bead is 0.2 or more and 0.7 or less.

Advantageous Effects of Invention

According to the present invention, it is possible to provide a method for producing expanded beads that have excellent in-mold moldability and can produce a molded article of polyethylene-based resin expanded beads with high biomass degree over a wide density range.

Description of Embodiments

[Method for producing expanded beads]

The method for producing expanded beads of the present invention is a method for producing expanded beads having a bulk density of 10 kg/m$^3$ or more and 240 kg/m$^3$ or less by expanding resin particles comprising, as a base resin, a mixed resin of at least two linear low-density polyethylenes, wherein

the mixed resin comprises linear low-density polyethylene A having a biomass degree of 50% or more as measured according to ASTM D 6866 and linear low-density polyethylene B;
a melt flow rate $MFR_A$ of the linear low-density polyethylene A measured under conditions of a temperature of 190°C and a load of 2.16 kg is 0.1 g/10 min or more and 3 g/10 min or less;

a difference $|MFR_A - MFR_B|$ between the melt flow rate $MFR_A$ of the linear low-density polyethylene A and a melt flow rate $MFR_B$ of the linear low-density polyethylene B measured under conditions of a temperature of 190°C and a load of 2.16 kg is 0 g/10 min or more and 2 g/10 min or less;

a mass ratio of the linear low-density polyethylene A to the linear low-density polyethylene B in the mixed resin is 5/95 to 95/5;

the mixed resin has a biomass degree of 5% or more as measured according to ASTM D 6866;

the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min;

a heat of fusion at the high-temperature peak is 10 J/g or more and 50 J/g or less.

<Resin particle>

The method for producing expanded beads of the present invention includes expanding resin particles containing, as a base resin, a mixed resin of at least two linear low-density polyethylenes. The mixed resin and linear low-density polyethylene are described below.

<Mixed resin>

The resin particles used in the method for producing expanded beads of the present invention contain a mixed resin of at least two linear low-density polyethylenes as a base resin. In the present specification, "containing a mixed resin of at least two linear low-density polyethylenes as a base resin" means that the resin particles are composed of a resin containing a mixed resin of at least two linear low-density polyethylenes as a main component.

The mixed resin also contains linear low-density polyethylene A having a biomass degree of 50% or more as measured according to ASTM D 6866 and linear low-density polyethylene B.

Furthermore, the melt flow rate $MFR_A$ of the linear low-density polyethylene A measured under conditions of a temperature of 190°C and a load of 2.16 kg is 0.1 g/10 min or more and 3 g/10 min or less; a difference $|MFR_A - MFR_B|$ between the melt flow rate $MFR_A$ of the linear low-density polyethylene A and a melt flow rate $MFR_B$ of the linear low-density polyethylene B measured under conditions of a temperature of 190°C and a load of 2.16 kg is 0 g/10 min or more and 2 g/10 min or less; a mass ratio A/B of the linear low-density polyethylene A to the linear low-density polyethylene B in the mixed resin is 5/95 to 95/5; and the mixed resin has a biomass degree of 5% or more as measured according to ASTM D 6866. In addition, the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min, and a heat of fusion at the high-temperature peak is 10 J/g or more and 50 J/g or less.

Next, linear low-density polyethylene A and linear low-density polyethylene B contained in the mixed resin are described.

(Linear low-density polyethylene A)

The linear low-density polyethylene A has a biomass degree of 50% or more as measured according to ASTM D 6866. A melt flow rate $MFR_A$ measured under conditions of a temperature of 190°C and a load of 2.16 kg is 0.1 g/10 min or more and 3 g/10 min or less.

When the biomass degree of the linear low-density polyethylene A falls within the above range, the use of fossil resources can be suppressed in the production of the molded article, and the amount of carbon dioxide emitted in the life cycle of the molded article can also be reduced.

From the above viewpoint, the biomass degree $BC_A$ of the linear low-density polyethylene A as measured according to ASTM D 6866 is 50% or more, preferably 60% or more, more preferably 70% or more, still more preferably 80% or more. The upper limit is not limited, and the biomass degree $BC_A$ of the linear low-density polyethylene A as measured according to ASTM D 6866 may be 100% or less. From the viewpoint of enhancing the in-mold moldability of the expanded beads, however, the biomass degree $BC_A$ of the linear low-density polyethylene A as measured according to ASTM D 6866 is preferably 95% or less, more preferably 90% or less. The biomass degree is measured according to ASTM D 6866 and means the proportion of naturally-occurring components in the linear low-density polyethylene A. In addition, the biomass degree is a value determined by measuring the concentration of radiocarbon $C^{14}$ against the linear low-density polyethylene.

The melt flow rate $MFR_A$ of the linear low-density polyethylene A measured under conditions of a temperature of 190°C and a load of 2.16 kg is 0.1 g/10 min or more and 3 g/10 min or less. When the melt flow rate $MFR_A$ of the linear low-density polyethylene A falls within the range, the in-mold moldability of the expanded beads can be enhanced.

The melt flow rate $MFR_A$ of the linear low-density polyethylene A is preferably 0.3 g/10 min or more, more preferably 0.5 g/10 min or more, still more preferably 0.7 g/10 min or more. The melt flow rate $MFR_A$ of the linear low-density polyethylene A is preferably 2.0 g/10 min or less, more preferably 1.8 g/10 min or less, still more preferably 1.5 g/10 min or less, even more preferably 1.4 g/10 min or less.

Note that the melt flow rate $MFR_A$ of the linear low-density polyethylene A is a value measured under conditions of a temperature of 190°C and a load of 2.16 kg. More specifically, the melt flow rate can be measured according to JIS K 7210-1:2014 by the method described in the section of Examples.

The density $\rho_A$ of the linear low-density polyethylene A is preferably 910 kg/m$^3$ or more and 940 kg/m$^3$ or less, and from the viewpoint of easily producing expanded beads having desired physical properties, more preferably 910 kg/m$^3$ or more and 935 kg/m$^3$ or less, still more preferably 910 kg/m$^3$ or more and 928 kg/m$^3$ or less, even more preferably 912 kg/m$^3$ or more and 925 kg/m$^3$ or less, particularly preferably 914 kg/m$^3$ or more and 922 kg/m$^3$ or less.

The density $\rho_A$ of the linear low-density polyethylene A is measured by Method A (immersion method) described in JIS K 7112:1999.

The melting point $Tm_A$ of the linear low-density polyethylene A is, from the viewpoint of enhancing the mechanical properties of the resultant molded article, preferably 100°C or higher and 130°C or lower. The melting point $Tm_A$ of the linear low-density polyethylene A is more preferably 110°C or higher, still more preferably 120°C or higher, even more preferably 122°C or higher. On the other hand, the melting point $Tm_A$ of the linear low-density polyethylene A is, from the viewpoint of enhancing the in-mold moldability of the expanded beads under a low molding pressure condition, preferably 128°C or lower, more preferably 126°C or lower.

The melting point $Tm_A$ of the linear low-density polyethylene A is measured based on JIS K 7121 :2012, using a test piece of the linear low-density polyethylene. Specifically, the melting point can be measured according to the method described in the section of Examples.

From the viewpoint of easily producing expanded beads having desired physical properties, the heat of fusion $\Delta H_A$ of the linear low-density polyethylene A is preferably 60 J/g or more, more preferably 70 J/g or more, still more preferably 75 J/g or more. Also, from the same viewpoint, the heat of fusion $\Delta H_A$ of the linear low-density polyethylene A is preferably 120 J/g or less, more preferably 110 J/g or less, still more preferably 100 J/g or less, particularly preferably 90 J/g or less.

The heat of fusion $\Delta H_A$ of the linear low-density polyethylene A can be determined from the DSC curve obtained by carrying out differential scanning calorimetry (DSC) according to JIS K 7122:2012 using a test piece of the linear low-density polyethylene A. Specifically, the heat of fusion can be measured according to the method described in the section of Examples.

The linear low-density polyethylene A is a copolymer of ethylene and α-olefin, having a density of 910 kg/m$^3$ or more and 940 kg/m$^3$ or less and having a linear structure.

The α-olefin is preferably an α-olefin having 3 to 20 carbon atoms, more preferably an α-olefin having 3 to 10 carbon atoms, still more preferably an α-olefin having 3 to 6 carbon atoms.

Specific examples of the α-olefin include propylene, 1-butene, 1-pentene, 1-hexene, 1-octene, 4-methyl-1-butene, 3,3-dimethyl-1-butene, 4-methyl-1-pentene, 4,4-dimethyl-1-pentene, and 1-octene. Among these, from the viewpoint of stably producing expanded beads excellent in in-mold moldability, the α-olefin preferably includes at least one selected from the group consisting of 1-butene, 1-hexene, and 4-methyl-1-pentene.

Therefore, the linear low-density polyethylene A is preferably linear low-density polyethylene A1 containing a butene component and a hexene component as copolymerization components (comonomer) or linear low-density polyethylene A2 containing a butene component as a copolymerization component (comonomer), more preferably linear low-density polyethylene A1 containing a butene component and a hexene component as copolymerization components.

Note that the component derived from hexene in the linear low-density polyethylene containing a butene component and a hexene component as copolymerization components includes 1-hexene and 4-methyl-1-pentene.

From the viewpoint of stably producing expanded beads excellent in in-mold moldability, in the case of using linear low-density polyethylene A2 containing a butene component as the linear low-density polyethylene A, the content of the butene component in the linear low-density polyethylene A2 is preferably 2 mol% or more and 7 mol% or less, more preferably 3 mol% or more and 6 mol% or less.

From the same viewpoint, in the case of using linear low-density polyethylene A1 containing a butene component and a hexene component as the linear low-density polyethylene A, the content of the butene component in the linear low-density polyethylene A1 is preferably 0.5 mol% or more and 6 mol% or less, more preferably 1 mol% or more and 5 mol% or less, still more preferably 2 mol% or more and 4 mol% or less. In the case of using linear low-density polyethylene A1 containing a butene component and a hexene component, the content of the hexene component in the linear low-density polyethylene A1 is preferably 0.2 mol% or more and 5 mol% or less, more preferably 0.5 mol% or more and 4 mol% or less, still more preferably 0.8 mol% or more and 3 mol% or less.

Within a range capable of attaining the intended object of the present invention without impairing advantageous effects of the present invention, the linear low-density polyethylene A may contain a component derived from propylene as an α-olefin (copolymerization component; comonomer). In the case of containing a component derived from propylene as a copolymerization component, the linear low-density polyethylene A tends to be a linear low-density polyethylene having a low density while having a relatively high melting point and a tendency to change its physical properties slowly when softened, whereby excessive shrinkage of the expanded beads immediately after expansion is suppressed during expansion of the resin particles. Furthermore, during the in-mold molding of the expanded beads, the molded article immediately after molding is prevented from excessively sinking. Thus, expanded beads having excellent in-mold moldability can be obtained. In the case where the linear low-density polyethylene A contains a component derived from propylene, the content of the component derived from propylene in the linear low-density polyethylene A is preferably 0.3 mol% or more and 5 mol% or less, more preferably 0.5 mol% or more and 4 mol% or less, still more preferably 0.8 mol% or more and 3 mol% or less, particularly preferably 1 mol% or more and 2 mol% or less.

Note that the contents above are contents when the total of the component derived from ethylene and the component derived from an α-olefin is set to 100% by mass. The content of the component derived from α-olefin in the linear low-density polyethylene A is preferably 10 mol% or less, more preferably 8 mol% or less. The content of the component derived from α-olefin in the linear low-density polyethylene A is preferably 0.5 mol% or more, more preferably 1 mol% or more.

The content of the component derived from α-olefin in the linear low-density polyethylene A can be determined, for example, by carbon-13 NMR spectroscopy ($^{13}$C-NMR) measurement, which will be described in Examples.

From the same viewpoint, in the case of using a linear low-density polyethylene A1 containing a butene component and a hexene component as the linear low-density polyethylene A, the ratio of the content of the hexene component to the content of the butene component [hexene component content (mol%)/butene component content (mol%)] in the linear low-density polyethylene A1 is preferably 0.1 or more and 2 or less, more preferably 0.2 or more and 1 or less, still more preferably 0.3 or more and 0.8 or less.

In addition, in the case where the linear low-density polyethylene A contains a component derived from propylene, the ratio of the content of the component derived from propylene to the content of the component derived from an α-olefin other than propylene (for example, butene and/or hexene) [propylene component content (mol%)/α-olefin component content other than propylene (mol%)] in the linear low-density polyethylene A is preferably 0.1 or more and 2 or less, more preferably 0.2 or more and 1 or less, still more preferably 0.3 or more and 0.7 or less.

(Linear low-density polyethylene B)

The linear low-density polyethylene B is linear low-density polyethylene in which the difference $|MFR_A - MFR_B|$ (absolute value) between the melt flow rate $MFR_A$ of the linear low-density polyethylene A and the melt flow rate $MFR_B$ of the linear low-density polyethylene B measured under conditions of a temperature of 190°C and a load of 2.16 kg is 0 g/10 min or more and 2 g/10 min or less.

When the linear low-density polyethylene A is mixed with linear low-density polyethylene B having physical properties different from those of the linear low-density polyethylene A as described later to form a mixed resin, the use of the linear low-density polyethylene B having a small difference in melt flow rate from that of the linear low-density polyethylene A enables the production of expanded beads having excellent in-mold moldability exhibiting the effect of containing one linear low-density polyethylene in the mixed resin.

The $|MFR_A - MFR_B|$ is preferably 1.8 g/10 min or less, more preferably 1.5 g/10 min or less, still more preferably 1.4 g/10 min or less. The lower limit is not limited, and may be 0 g/10 min.

The melt flow rate $MFR_B$ of the linear low-density polyethylene B measured under conditions of a temperature of 190°C and a load of 2.16 kg is preferably 0.1 g/10 min or more and 2 g/10 min or less. When the melt flow rate $MFR_B$ of the linear low-density polyethylene B falls within the range, the in-mold moldability of the expanded beads can be enhanced.

The melt flow rate $MFR_B$ of the linear low-density polyethylene B is more preferably 0.3 g/10 min or more, still more preferably 0.5 g/10 min or more, and even more preferably 0.7 g/10 min or more. The melt flow rate $MFR_B$ of the linear low-density polyethylene B is more preferably 1.8 g/10 min or less, still more preferably 1.5 g/10 min or less, and even more preferably 1.4 g/10 min or less.

Note that the melt flow rate $MFR_B$ of the linear low-density polyethylene B is a value measured under conditions of a temperature of 190°C and a load of 2.16 kg. More specifically, the melt flow rate can be measured according to JIS K 7210-1:2014 by the method described in the section of Examples.

The density $\rho_B$ of the linear low-density polyethylene B is preferably 910 kg/m$^3$ or more and 940 kg/m$^3$ or less, and from the viewpoint of easily producing expanded beads having desired physical properties, more preferably 912 kg/m$^3$ or more and 935 kg/m$^3$ or less, still more preferably 914 kg/m$^3$ or more and 928 kg/m$^3$ or less, even more preferably 920 kg/m$^3$ or more and 928 kg/m$^3$ or less, particularly preferably 922 kg/m$^3$ or more and 928 kg/m$^3$ or less.

The density $\rho_B$ of the linear low-density polyethylene B is measured by Method A (immersion method) described in JIS K 7112:1999.

The difference $|\rho_A - \rho_B|$ (absolute value) between the density $\rho_A$ of the linear low-density polyethylene A and the

density $\rho_B$ of the linear low-density polyethylene B is preferably 3 kg/m$^3$ or more. When the expanded beads are composed of a mixed resin in which linear low-density polyethylenes having different densities are mixed, it is possible to stably produce expanded beads having a desired biomass degree and capable of molding a molded article having excellent in-mold moldability and compression strength compared to the case where, for example, one linear low-density polyethylene having a relatively low density is used alone to produce expanded beads. The $|\rho_B - \rho_A|$ is preferably 4 kg/m$^3$ or more, more preferably 5 kg/m$^3$ or more, still more preferably 6 kg/m$^3$ or more. The upper limit is not limited, and is preferably 20 kg/m$^3$ or less, more preferably 15 kg/m$^3$ or less.

In addition, the density $\rho_B$ of the linear low-density polyethylene B is preferably larger than the density $\rho_A$ of the linear low-density polyethylene A, and the difference $(\rho_B - \rho_A)$ (relative value) between the density $\rho_B$ of the linear low-density polyethylene B and the density $\rho_A$ of the linear low-density polyethylene A is preferably 3 kg/m$^3$ or more. In this case, expanded beads having excellent in-mold moldability while having a desired biomass degree can be stably obtained. The $(\rho_B - \rho_A)$ is preferably 4 kg/m$^3$ or more, more preferably 5 kg/m$^3$ or more, still more preferably 6 kg/m$^3$ or more. The upper limit is not limited, and is preferably 20 kg/m$^3$ or less, more preferably 15 kg/m$^3$ or less.

The melting point $Tm_B$ of the linear low-density polyethylene B is, from the viewpoint of enhancing the mechanical properties of the resultant molded article, preferably 100°C or higher and 130°C or lower. The melting point $Tm_B$ of the linear low-density polyethylene B is more preferably 110°C or higher, still more preferably 116°C or higher, even more preferably 120°C or higher. On the other hand, the melting point $Tm_B$ of the linear low-density polyethylene B is, from the viewpoint of enhancing the in-mold moldability of the expanded beads under a low molding pressure condition, preferably 128°C or lower, more preferably 126°C or lower, still more preferably 124°C or lower.

The melting point $Tm_B$ of the linear low-density polyethylene B is measured based on JIS K 7121 :2012, using a test piece of the linear low-density polyethylene. Specifically, the melting point can be measured according to the method described in the section of Examples.

The difference $|Tm_A - Tm_B|$ (absolute value) between the melting point $Tm_A$ of the linear low-density polyethylene A and the melting point $Tm_B$ of the linear low-density polyethylene B is preferably 0°C or higher and to 4°C or lower. When the expanded beads are composed of a mixed resin in which linear low-density polyethylenes having a small difference in melting point are mixed, it is possible to stably produce expanded beads having a desired biomass degree and excellent in-mold moldability. The $|Tm_A - Tm_B|$ is preferably 3°C or lower, more preferably 2°C or lower. The lower limit is not limited, and may be 0°C.

From the viewpoint of easily producing expanded beads having desired physical properties, the heat of fusion $\Delta H_B$ of the linear low-density polyethylene B is preferably 60 J/g or more and 120 J/g or less.

In addition, from the viewpoint that the in-mold moldability of the expanded beads can be enhanced while the expanded beads have a desired biomass degree, the heat of fusion $\Delta H_B$ of the linear low-density polyethylene B is preferably 70 J/g or more, more preferably 80 J/g or more, still more preferably 90 J/g or more, even more preferably 100 J/g or more, particularly preferably 105 J/g or more. Also, from the same viewpoint, the heat of fusion $\Delta H_B$ of the linear low-density polyethylene B is preferably 118 J/g or less, more preferably 115 J/g or less.

The heat of fusion $\Delta H_B$ of the linear low-density polyethylene B can be determined from the DSC curve obtained by carrying out differential scanning calorimetry (DSC) according to JIS K 7122:2012 using a test piece of the linear low-density polyethylene B. Specifically, the heat of fusion can be measured according to the method described in the section of Examples.

The difference $|\Delta H_B - \Delta H_A|$ (absolute value) between the heat of fusion $\Delta H_B$ of the linear low-density polyethylene B and the heat of fusion $\Delta H_A$ of the linear low-density polyethylene A is preferably 3 J/g or more, more preferably 5 J/g or more, still more preferably 10 J/g or more and 40 J/g or less. When the expanded beads are composed of a mixed resin in which linear low-density polyethylenes having different heat of fusion are mixed, it is possible to stably produce expanded beads having a desired biomass degree and capable of molding a molded article having excellent in-mold moldability and compression strength compared to the case where, for example, one linear low-density polyethylene having a relatively small heat of fusion is used alone to produce expanded beads. The $|\Delta H_B - \Delta H_A|$ is even more preferably 15 J/g or more, further more preferably 20 J/g or more, particularly preferably 25 J/g or more. The $|\Delta H_B - \Delta H_A|$ is more preferably 38 J/g or less, still more preferably 35 J/g or less.

In addition, the heat of fusion $\Delta H_B$ of the linear low-density polyethylene B is preferably larger than the heat of fusion $\Delta H_A$ of the linear low-density polyethylene A, and the difference $(\Delta H_B - \Delta H_A)$ (relative value) between the heat of fusion $\Delta H_B$ of the linear low-density polyethylene B and the heat of fusion $\Delta H_A$ of the linear low-density polyethylene A is preferably 5 J/g or more, more preferably 10 J/g or more and 40 J/g or less. In this case, it is possible to stably produce expanded beads capable of molding a molded article with excellent in-mold moldability and compression strength while achieving expanded beads having a desired biomass degree. The $(\Delta H_B - \Delta H_A)$ is still more preferably 15 J/g or more, even more preferably 20 J/g or more, particularly preferably 25 J/g or more. The $(\Delta H_B - \Delta H_A)$ is still more preferably 38 J/g or less, even more preferably 35 J/g or less.

The linear low-density polyethylene B may be linear low-density polyethylene derived from petroleum or linear low-density polyethylene containing a component derived from biomass. Therefore, the biomass degree $BC_B$ as measured according to ASTM D 6866 of the linear low-density polyethylene B is not limited. In the case where the linear low-density polyethylene B is linear low-density polyethylene containing a component derived from biomass, however, the biomass degree $BC_B$ may be 10% or more, 20% or more, 30% or more, 50% or more, or 70% or more. Note that the upper limit of the biomass degree $BC_B$ is 100%. In the case where the linear low-density polyethylene B is linear low-density polyethylene derived from petroleum, the biomass degree $BC_B$ of the linear low-density polyethylene B as measured according to ASTM D 6866 may be 0%.

From the viewpoint of stably enhancing the in-mold moldability of the expanded beads, the biomass degree $BC_B$ of the linear low-density polyethylene B is preferably 20% or less, more preferably 10% or less. The linear low-density polyethylene B is still more preferably linear low-density polyethylene derived from petroleum.

The difference $|BC_A-BC_B|$ (absolute value) between the biomass degree $BC_A$ of the linear low-density polyethylene A and the biomass degree $BC_B$ of the linear low-density polyethylene B as measured according to ASTM D 6866 is preferably 5% or more. In this case, it is possible to stably produce expanded beads having a desired biomass degree and excellent in-mold moldability. In addition, the biomass degree $BC_A$ of the linear low-density polyethylene A is preferably larger than the biomass degree $BC_B$ of the linear low-density polyethylene B.

From the viewpoint of more easily enhancing the in-mold moldability of the expanded beads, the $|BC_A - BC_B|$ is preferably 10% or more, more preferably 20% or more, still more preferably 30% or more, even more preferably 50% or more, particularly preferably 70% or more. The upper limit is not limited, and may be 100% or less. From the viewpoint of stably enhancing the in-mold moldability of the expanded beads, however, the $|BC_A - BC_B|$ is preferably 95% or less, more preferably 90% or less.

From the above viewpoint, the difference $(BC_A - BC_B)$ (relative value) between the biomass degree $BC_A$ of the linear low-density polyethylene A and the biomass degree $BC_B$ of the linear low-density polyethylene B as measured according to ASTM D 6866 is preferably 5% or more, preferably 10% or more, more preferably 20% or more, still more preferably 30% or more, even more preferably 50% or more, particularly preferably 70% or more. The upper limit is not limited, and may be 100% or less. From the viewpoint of stably enhancing the in-mold moldability of the expanded beads, however, the $(BC_A - BC_B)$ is preferably 95% or less, more preferably 90% or less.

The linear low-density polyethylene B is a copolymer of ethylene and $\alpha$-olefin, having a density of 910 kg/m$^3$ or more and 940 kg/m$^3$ or less and having a linear structure.

The $\alpha$-olefin is preferably an $\alpha$-olefin having 3 to 20 carbon atoms, more preferably an $\alpha$-olefin having 3 to 10 carbon atoms, still more preferably an $\alpha$-olefin having 3 to 6 carbon atoms.

Specific examples of the $\alpha$-olefin include propylene, 1-butene, 1-pentene, 1-hexene, 1-octene, 4-methyl-1-butene, 3,3-dimethyl-1-butene, 4-methyl-1-pentene, 4,4-dimethyl-1-pentene, 2-methylheptene, and 3-ethylhexene. Among these, from the viewpoint of stably producing expanded beads excellent in in-mold moldability, the $\alpha$-olefin preferably includes at least one selected from the group consisting of 1-octene, 1-hexene, and 4-methyl-1-pentene.

Therefore, the linear low-density polyethylene B is preferably linear low-density polyethylene B 1 containing an octene component as a copolymerization component (comonomer) or linear low-density polyethylene B2 containing a hexene component as a copolymerization component (comonomer), and more preferably linear low-density polyethylene B 1 containing an octene component.

The component derived from octene in the linear low-density polyethylene containing an octene component as a copolymerization component includes 1-octene, 2-methylheptene, and 3-ethylhexene, preferably 1-octene. In addition, the component derived from hexene in the linear low-density polyethylene containing a hexene component includes 1-hexene and 4-methyl-1-pentene, preferably 4-methyl-1-pentene.

From the viewpoint of stably producing expanded beads excellent in in-mold moldability, in the case of using linear low-density polyethylene B2 containing a hexene component as the linear low-density polyethylene B, the content of the hexene component in the linear low-density polyethylene B2 is preferably 0.5 mol% or more and 5 mol% or less, more preferably 1 mol% or more and 3 mol% or less.

In addition, from the same viewpoint, in the case of using linear low-density polyethylene B 1 containing an octene component as the linear low-density polyethylene B, the content of the octene component in the linear low-density polyethylene B 1 is preferably 0.5 mol% or more and 5 mol% or less, more preferably 1 mol% or more and 3 mol% or less.

Note that the contents above are contents when the total of the component derived from ethylene and the component derived from an $\alpha$-olefin is set to 100% by mass. The content of the component derived from $\alpha$-olefin in the linear low-density polyethylene B is preferably 10 mol% or less, more preferably 8 mol% or less, still more preferably 5 mol% or less, even more preferably 3 mol% or less. The content of the component derived from $\alpha$-olefin in the linear low-density polyethylene B is preferably 0.5 mol% or more, more preferably 1 mol% or more.

The content of the component derived from $\alpha$-olefin in the linear low-density polyethylene B can be determined, for example, by carbon-13 NMR spectroscopy ($^{13}$C-NMR) measurement, which will be described in the section of Examples.

(Properties of mixed resin and expanded beads)

The linear low-density polyethylene, a base resin of the resin particles, is a mixed resin of at least two linear low-density polyethylenes, including the linear low-density polyethylene A and the linear low-density polyethylene B. The mixed resin is, for example, formed by kneading the linear low-density polyethylene A and linear low-density polyethylene B. From the viewpoint of stably producing expanded particles excellent in in-mold moldability with a wide molding range to yield a good article, it is preferable that linear low-density polyethylene A is the linear low-density polyethylene A1 and the linear low-density polyethylene B is the linear low-density polyethylene B1.

In addition, the mass ratio of the linear low-density polyethylene A to the linear low-density polyethylene B in the mixed resin is 5/95 to 95/5; the mixed resin has a biomass degree of 5% or more as measured according to ASTM D 6866; the mixed resin constituting the expanded beads has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; and a heat of fusion at the high-temperature peak is 10 J/g or more and 50 J/g or less.

The mass ratio of the linear low-density polyethylene A to the linear low-density polyethylene B in the mixed resin is 5/95 to 95/5.

When the linear low-density polyethylene A is mixed with linear low-density polyethylene B having physical properties different from those of the linear low-density polyethylene A as described above to form a mixed resin, the expanded beads are composed of the mixed resin in which the linear low-density polyethylene B having a small difference in melt flow rate from that of the linear low-density polyethylene A is mixed at a specific mass ratio, whereby the expanded beads that have excellent in-mold moldability can be obtained while exerting the effect of including one of the linear low-density polyethylenes in the mixed resin.

From the viewpoint of easily increasing the biomass degree of the expanded beads, the mass ratio (A/B) of the linear low-density polyethylene A to the linear low-density polyethylene B (mass ratio of linear low-density polyethylene A to linear low-density polyethylene B) is 5/95 or more (1/19 or less), preferably 10/90 or more (1/9 or more), more preferably 20/80 or more (1/4 or more), still more preferably 30/70 or more (3/7 or more). From the viewpoint of easily enhancing the in-mold moldability of the expanded beads, the mass ratio (A/B) of the linear low-density polyethylene A to the linear low-density polyethylene B (mass ratio of linear low-density polyethylene A to linear low-density polyethylene B) is 95/5 or less (19 or less), preferably 90/10 or less (9 or less), more preferably 80/20 or less (4 or less), still more preferably 70/30 or less (7/3 or less), even more preferably 60/40 or less (3/2 or less).

In addition, the mass ratio (A/B) of the linear low-density polyethylene A to the linear low-density polyethylene B (mass ratio of the linear low-density polyethylene A to the linear low-density polyethylene B) is preferably 25/75 or more (1/3 or more) and 90/10 or less (9 or less) from the viewpoints of enabling in-mold molding under a low molding pressure condition and stably producing expanded beads with a wide molding range to yield a good article.

Note that the mixed resin of the present invention may contain a polymer such as a resin or an elastomer other than the linear low-density polyethylene within a range not detracting from the advantageous effects of the present invention. In this case, the content of the other polymer than the linear low-density polyethylene A and the linear low-density polyethylene B in the mixed resin is preferably 40 parts by mass or less, more preferably 30 parts by mass or less, still more preferably 20 parts by mass or less, even more preferably 10 parts by mass or less, particularly preferably 5 parts by mass or less, based on a total of 100 parts by mass of the linear low-density polyethylene A and the linear low-density polyethylene B. In addition, the content of the other polymer than the linear low-density polyethylene in the mixed resin is preferably 80 parts by mass or less, more preferably 50 parts by mass or less, still more preferably 30 parts by mass or less, even more preferably 20 parts by mass or less, particularly preferably 10 parts by mass or less, based on 100 parts by mass of linear low-density polyethylene (linear low-density polyethylene A or linear low-density polyethylene B) with a low content in the mixed resin.

The mixed resin has a biomass degree of 5% or more as measured according to ASTM D 6866.

When the biomass degree of the mixed resin falls within the above range, the use of fossil resources can be suppressed in the production of the molded article, and the amount of carbon dioxide emitted in the life cycle of the molded article can also be reduced.

From the above viewpoint, the biomass degree of the mixed resin as measured according to ASTM D 6866 is 5% or more, preferably 10% or more, more preferably 20% or more, still more preferably 30% or more, even more preferably 40% or more. The upper limit is not limited, and the biomass degree of the mixed resin as measured according to ASTM D 6866 may be 100% or less. From the viewpoint of easily enhancing the in-mold moldability of the expanded beads, however, the biomass degree of the mixed resin as measured according to ASTM D 6866 is preferably 90% or less, more preferably 80% or less, still more preferably 70% or less, even more preferably 60% or less. The biomass degree is measured according to ASTM D 6866 and means the proportion of naturally-occurring components in the mixed resin. The biomass degree can be calculated by measuring the concentration of radiocarbon $C^{14}$ against the mixed resin or expanded beads, or from the biomass degree of biomass-derived resin used to produce the mixed resin or expanded beads and the content proportion of biomass-derived resin in the mixed resin or expanded beads.

The expanded beads (mixed resin constituting the expanded beads) have a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min, and a heat of fusion at the high-temperature peak is 10 J/g or more and 50 J/g or less.

The DSC curve is a DSC curve drawn in differential scanning calorimetry (DSC) according to JIS K 7122:2012. Specifically, using a differential scanning calorimeter, 1 to 3 mg of the mixed resin (expanded beads) are heated from 23°C to 200°C at a heating rate of 10°C/min to draw the DSC curve.

As described above, a melting peak intrinsic to the linear low-density polyethylene (intrinsic peak) and at least one melting peak on a higher temperature side than the intrinsic peak (high-temperature peak) appear on the DSC curve drawn by measurement of the expanded beads.

The description is given in more detail below.

The DSC curve means a DSC curve (DSC curve in the first heating) drawn by heating the expanded beads according to the above-mentioned measurement method. The melting peak intrinsic to the linear low-density polyethylene (intrinsic peak) refers to a melting peak that appears by melting of crystals that the linear low-density polyethylene constituting the mixed resin generally has.

On the other hand, the melting peaks (high-temperature peaks) on the high-temperature side then the intrinsic peaks are melting peaks appearing on the higher temperature side than the intrinsic peaks on the DSC curve in the first heating. In the case where the high-temperature peaks appear, it is presumed that secondary crystals are present in the resin. On the DSC curve (DSC curve in the second heating) drawn by heating the expanded beads from 23°C to 200°C at a heating rate of 10°C/min (first heating), then cooling them from 200°C to 23°C at a cooling rate of 10°C/min, and thereafter again heating them from 23°C to 200°C at a heating rate of 10°C/min (second heating), only a melting peak appears by melting of crystal that the linear low-density polyethylene constituting the mixed resin generally has. The intrinsic peak appears on the DSC curve in the first heating and also on the DSC curve in the second heating, and the peak temperature may somewhat differ between the first time and the second time, but in general, the difference is less than 5°C. With that, it can be confirmed that which peak is the intrinsic peak.

Preferably, on the DSC curve drawn in the second heating in heating the expanded beads from 23°C to 200°C at a heating rate of 10°C/min, then cooling them from 200°C to 23°C at a cooling rate of 10°C/min, and thereafter again heating them from 23°C to 200°C at a heating rate of 10°C/min, only a melting peak intrinsic to the linear low-density polyethylene (intrinsic peak) appears on the DSC curve drawn in the second heating.

The total heat of fusion of the expanded beads (mixed resin) is the sum of the heat of fusion of all the melting peaks (endothermic peaks) appearing on the DSC curve. The total heat of fusion of the expanded bead is preferably 70 J/g or more and 120 J/g or less, more preferably 70 J/g or more and 105 J/g or less. When the total heat of fusion of the expanded beads falls within the above range, expanded beads excellent in expandability of a second-stage expansion and in-mold moldability can be obtained, and a molded article excellent in strength can also be obtained.

The total heat of fusion of the expanded beads is, from the viewpoint of improving the strength of the resultant molded article, preferably 75 J/g or more, more preferably 80 J/g or more, still more preferably 85 J/g or more, particularly preferably 90 J/g or more. Also, the total heat of fusion of the expanded beads is, from the viewpoint of enhancing expandability of the second-stage expansion and the in-mold moldability of the expanded beads, preferably 105 J/g or less, more preferably 102 J/g or less, still more preferably 100 J/g or less, even more preferably 98 J/g or less.

The total heat of fusion of the expanded beads can be determined from the DSC curve obtained by carrying out differential scanning calorimetry (DSC) according to JIS K 7122:2012 using a test piece of the expanded beads thereof. Specifically, for condition control of the test piece, "(2) a case of measuring a melting temperature after predetermined heat treatment" is first employed, in which a test piece is heated from 23°C to 200°C at a heating rate of 10°C/min, then cooled them from 200°C to 23°C at a rate of 10°C/min after reaching 200°C, and again heated them from 23°C to 200°C at a rate of 10°C/min to draw a DSC curve (DSC curve at the time of second heating). The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment ($\alpha$-$\beta$) is measured, and the total heat of fusion of the mixed resin constituting expanded beads can be calculated from the area.

The heat of fusion at the high-temperature peak of the expanded beads is 10 J/g or more and 50 J/g or less. When the heat of fusion at the high-temperature peak of the expanded beads falls within the above range, the in-mold moldability of the expanded beads can be enhanced even in the case of expanded beads having a low bulk density, and the expanded beads can be obtained in a wide molding pressure range capable of in-mold molding. As a result, a good molded article can be obtained over a wide density range.

The heat of fusion at the high-temperature peak of the expanded beads is preferably 15 J/g or more, more preferably 20 J/g or more, still more preferably 30 J/g or more, even more preferably 32 J/g or more, from the viewpoint of suppressing sink marks of the molded article immediately after molding and enhancing in-mold moldability of the expanded beads, or from the viewpoint of stably suppressing shrinkage of second-stage expanded beads upon second-stage expansion of the expanded beads. The heat of fusion at the high-temperature peak of the expanded beads is 50 J/g or less, preferably 45 J/g or less, more preferably 40 J/g or less, from the viewpoint of improving the fusion-bonding properties of the expanded beads under low molding pressure conditions, enhancing the in-mold moldability of the expanded beads, and easily producing expanded beads having a lower bulk density upon second-stage expansion of the expanded beads.

The heat of fusion at the high-temperature peak can be determined by heat flux differential scanning calorimetry according to JIS K 7122:2012 using a test piece of the expanded beads thereof. Specifically, the heat of fusion can be determined from the DSC curve drawn by heating the expanded beads from 23°C to 200°C at a heating rate of 10°C/min (DSC curve in the first heating), and more specifically, can be measured by the method described in the section of Examples.

The expanded beads (mixed resin constituting the expanded beads) having a crystalline structure where an intrinsic peak and a high-temperature peak appear on the first DSC curve can be obtained, for example, by carrying out a holding step described later on the resin particles formed by kneading the linear low-density polyethylene A and the linear low-density polyethylene B.

The ratio of the heat of fusion at the high-temperature peak to the total heat of fusion of the expanded beads [heat of fusion at the high-temperature peak/total heat of fusion] is preferably 0.2 or more and 0.7 or less, more preferably 0.25 or more and 0.65 or less. When each heat of fusion mentioned above falls within the above range as well as the ratio mentioned above, expanded beads have excellent in-mold moldability and a wide molding pressure range capable of in-mold molding can be obtained over a wide density range. In addition, expanded beads with good expandability of the second-stage expansion can be obtained.

The ratio of the heat of fusion at the high-temperature peak to the total heat of fusion of the expanded beads is preferably 0.25 or more, more preferably 0.28 or more, still more preferably 0.30 or more, from the viewpoint of suppressing sink marks of the molded article immediately after molding and enhancing in-mold moldability of the expanded beads, or from the viewpoint of stably suppressing shrinkage of second-stage expanded beads upon second-stage expansion of the expanded beads. In addition, the ratio of the heat of fusion at the high-temperature peak to the total heat of fusion of the expanded beads is preferably 0.65 or less, more preferably 0.60 or less, still more preferably 0.55 or less, particularly preferably 0.50 or less, from the viewpoint of improving the fusion-bonding properties of the expanded beads under low molding pressure conditions, enhancing the in-mold moldability of the expanded beads, and easily producing expanded beads having a lower bulk density upon second-stage expansion of the expanded beads.

Note that the ratio of the heat of fusion at the high-temperature peak to the total heat of fusion can be calculated from the total heat of fusion and the heat of fusion at the high-temperature peak.

The melt flow rate of the mixed resin measured under conditions of a temperature of 190°C and a load of 2.16 kg is 0.1 g/10 min or more and 3 g/10 min or less. When the melt flow rate of the mixed resin falls within the above range, the in-mold moldability of the expanded beads can be enhanced.

The melt flow rate of the mixed resin is preferably 0.3 g/10 min or more, more preferably 0.5 g/10 min or more, still more preferably 0.7 g/10 min or more. The melt flow rate of the mixed resin is preferably 2.0 g/10 min or less, more preferably 1.8 g/10 min or less, still more preferably 1.5 g/10 min or less, even more preferably 1.4 g/10 min or less.

Note that the melt flow rate of the mixed resin is a value measured under conditions of a temperature of 190°C and a load of 2.16 kg. More specifically, the melt flow rate can be measured according to JIS K 7210-1:2014 by the method described in the section of Examples.

The density of the mixed resin is preferably 910 kg/m³ or more and 940 kg/m³ or less, and from the viewpoint of easily producing expanded beads having desired physical properties, more preferably 910 kg/m³ or more and 928 kg/m³ or less, still more preferably 912 kg/m³ or more and 926 kg/m³ or less, even more preferably 914 kg/m³ or more and 925 kg/m³ or less, particularly preferably 916 kg/m³ or more and 924 kg/m³ or less.

The density of the mixed resin is measured by Method A (immersion method) described in JIS K 7112:1999.

(Production of resin particles)

The resin particles for use in the method for producing the expanded beads of the present invention can be obtained by feeding the linear low-density polyethylene A, the linear low-density polyethylene B, and other optional additives such as a cell controlling agent into an extruder, heating and kneading them to give a resin melt of the mixed resin, and thereafter extruding the resin melt out of the extruder, while pelletizing it in a strand cutting system, a hot cutting system or an underwater cutting system.

The average mass per one particle of the resin particles is preferably controlled to 0.1 to 20 mg, more preferably 0.2 to 10 mg, still more preferably 0.3 to 5 mg, and even more preferably 0.4 to 2 mg. The outer shape of the particles is not specifically limited so far as it falls within a range capable of attaining the intended object of the present invention, but is preferably columnar.

In the case where the outer shape of the resin particles is columnar, the particle diameter (length in the extrusion direction) of the resin particles is preferably 0.1 to 3.0 mm, more preferably 0.3 to 1.5 mm. The ratio of the length in the extrusion direction of the resin particles to the length in the direction perpendicular to the extrusion direction of the resin particles (diameter of the resin particles), ratio of length/diameter is preferably 0.5 to 5.0, more preferably 1.0 to 3.0.

In the case of pelletizing by a strand cutting method, the particle diameter, the ratio of length/diameter and the average mass of the resin particles can be controlled by appropriately changing the extrusion rate in extruding the resin melt, the take-up rate of the strand, and the cutter speed in cutting the strand.

Additives may be appropriately contained in the mixed resin within a range not detracting from the advantageous effects of the present invention. Examples of the additives include an antioxidant, a UV absorbent (ultraviolet absorbing agent), an antistatic agent, a flame retardant, a pigment, a dye and a cell controlling agent. For example, these additives can be contained in the expanded beads by adding them to the resin particles in a step of producing the resin particles.

Examples of the cell controlling agent usable include an inorganic powder and an organic powder. Examples of the inorganic powder include a metal borate such as zinc borate and magnesium borate. The organic powder includes a fluorine resin powder such as polytetrafluoroethylene (PTFE).

From the viewpoint of stably producing expanded beads having a desired bulk density and having a less fluctuating cell diameter, the blending amount of the cell controlling agent in the resin particles is preferably 50 ppm by mass or more and 5000 ppm by mass or less, more preferably 100 ppm by mass or more and 2000 ppm by mass or less, still more preferably 150 ppm by mass or more and 1500 ppm by mass or less.

From the viewpoint of easily controlling the average cell diameter of the expanded beads to fall within a desired range, a metal borate is preferably used as the cell controlling agent, and zinc borate is more preferred. In the case of using zinc borate, the arithmetic average particle diameter by number is preferably 0.5 $\mu$m or more and 10 $\mu$m or less, more preferably 1 $\mu$m or more and 8 $\mu$m or less.

The arithmetic average particle diameter by number of zinc borate can be determined by converting the particle diameter distribution by volume as measured according to a laser diffraction scattering method to a particle diameter distribution by number, on the assumption that the shape of the particles is spherical, to give a particle diameter distribution by number, and arithmetically averaging the particle diameter based on the particle diameter distribution by number. The particle diameter means a diameter of a hypothetical sphere having the same volume as that of the particle.

<Production of expanded beads>

The method for producing expanded beads of the present invention may be a method for producing expanded beads having a bulk density of 10 kg/m$^3$ or more and 240 kg/m$^3$ or less by expanding the above-described resin particles containing a mixed resin as a base resin. The method for producing expanded beads of the present invention is, for example, a method of impregnating resin particles containing a mixed resin of at least two linear low-density polyethylenes as a base resin with a blowing agent and expanding the resin particles containing the blowing agent. The method of expanding the resin particles to be employed may involve heating the resin particles containing a blowing agent with a heating medium such as steam, or by opening the resin particles containing a blowing agent held under a predetermined temperature and pressure atmosphere to a pressure atmosphere lower than the aforementioned pressure atmosphere. One preferred example of the production method is described below.

A preferred method for producing the expanded beads of the present invention is a method for producing expanded beads by expanding the resin particles, the method including discharging resin particles that contain a blowing agent as dispersed in an aqueous medium in a vessel from the vessel to under a pressure atmosphere lower than the pressure inside the vessel along with the aqueous medium to expand the resin particles.

More specifically, the production method includes a dispersion step of dispersing the resin particles containing a mixed resin of at least two linear low-density polyethylenes as a base resin in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles.

A preferred production method for the expanded beads of the present invention includes a dispersion step of dispersing the resin particles in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles. Preferably, these steps are carried out in this order, more preferably, these steps are carried out as a series of steps. Note that the method of expansion through this series of steps is also referred to as a dispersing medium-discharging expanding method.

As the dispersing medium for dispersing the resin particles obtained in the manner as above, in a closed vessel, an aqueous dispersing medium is preferably used in the dispersion step. The aqueous dispersing medium is a dispersing medium that contains water as a main component. The proportion of water in the aqueous dispersing medium is preferably 70% by mass or more, more preferably 80% by mass or more, even more preferably 90% by mass or more, and may be 100% by mass. The other dispersing medium than water in the aqueous dispersing medium includes ethylene glycol, glycerin, methanol and ethanol.

In the dispersing medium-discharging expanding method, which is favorably employed in the present invention, preferably, a dispersant is added to the dispersing medium, so that the resin particles heated in the vessel do not fuse with one another in the vessel. The dispersant may be any one capable of preventing resin particles from fusing in a vessel. However, use of an inorganic dispersant may be preferred. Examples of the inorganic dispersant include a natural or synthetic clay mineral such as kaolin, mica and clay, and aluminum oxide, titanium oxide, basic magnesium carbonate, basic zinc carbonate, calcium carbonate and iron oxide. One or more of these may be used either singly or as combined. Among them, a natural or synthetic clay mineral is preferred. The amount of the dispersant to be added is preferably 0.001 to 5 parts by mass per 100 parts by mass of the resin particles.

In the case where the dispersant is used, preferably, an anionic surfactant such as sodium dodecylbenzenesulfonate, sodium alkylsulfonate or sodium oleate is used together therewith, as an auxiliary dispersant. Preferably, the auxiliary dispersant is added in an amount of approximately 0.001 to 1 part by mass per 100 parts by mass of the resin particles.

In the blowing agent impregnation step, the blowing agent for use for expanding the resin particles is preferably a physical blowing agent. Examples of the physical blowing agent include an inorganic physical blowing agent and an organic physical blowing agent. Examples of the inorganic physical blowing agent include carbon dioxide, air, nitrogen, helium and argon. Examples of the organic physical blowing agent include an aliphatic hydrocarbon such as propane, n-butane, isobutane, n-pentane, isopentane, and hexane; a cycloaliphatic hydrocarbon such as cyclopentane and cyclohexane; and a halogenated hydrocarbon such as ethyl chloride, 2,3,3,3-tetrafluoropropene, trans-1,3,3,3-tetrafluoropropene, and trans-1-chloro-3,3,3-trifluoropropene. The physical blowing agent may be used alone or in combination of two or more thereof. An inorganic physical blowing agent and an organic physical blowing agent may be used in combination. The blowing agent for use in the present production method is, from the viewpoint of facilitating the production of the desired expanded beads, preferably an inorganic physical blowing agent, more preferably carbon dioxide.

Although the amount of the blowing agent added is determined in consideration of the desired bulk density of the expanded beads, the type of the blowing agent, and other factors, in the case of using a physical blowing agent, for example, the amount of the physical blowing agent to be added is preferably 0.1 to 30 parts by mass, more preferably 0.5 to 15 parts by mass, relative to 100 parts by mass of the resin particles.

The method for impregnating the blowing agent in the resin particles in the expanded beads production step is preferably a method including dispersing the resin particles in an aqueous dispersing medium in a closed vessel while injecting a blowing agent under pressure into the closed vessel, and heating, pressurizing, and holding the closed vessel to thereby impregnate the blowing agent in the resin particles, for example.

In the expanding step, the pressure (inner pressure) inside the closed vessel during expanding is preferably 0.5 MPa(G) or more, more preferably 0.8 MPa(G) or more. The upper limit is preferably 4 MPa(G) or less, more preferably 3 MPa(G) or less. Within the above range, desired expanded beads can be safely produced with no risk of breakage or explosion of the closed vessel. Also preferably, the closed vessel is heated preferably from 100 to 200°C, more preferably from 130 to 160°C, and then kept at the temperature for approximately 5 to 30 minutes, and thereafter the blowing agent-containing resin particles are taken out of the closed vessel and discharged into an atmosphere having a lower pressure than the inner pressure inside the closed vessel (for example, an atmospheric pressure) to expand the resin particles.

The expanded particles having a crystal structure where an intrinsic peak and a high-temperature peak appear on the first DSC curve can be produced, for example, as follows:
First, the resin particle dispersed in the dispersing medium in the closed vessel is heated to a temperature of (melting point of the linear low-density polyethylene constituting the resin particle - 15°C) to (melting point of the linear low-density polyethylene constituting the resin particle + 10°C) and also held at this temperature for a sufficient time, preferably for about 10 to 60 minutes (holding step). Next, by expanding the resin particle that has undergone this holding step, an expanded bead exhibiting the melting peak described above can be obtained.

In the production of expanded beads, the resin particles that have undergone the holding step may be prepared in advance, and the expanded beads may be obtained by expanding the resin particles that have undergone the holding step. For example, as a part of the dispersing step or the blowing agent impregnation step, the holding step may be carried out on the resin particles, and the resin particles that have undergone the holding step may be expanded to produce expanded beads.

From the viewpoint of enhancing the productivity of the expanded bead, it is preferable to heat the resin particle dispersed in the dispersing medium in the closed vessel in the presence of the blowing agent and carry out the above holding step, and then release the contents of the closed vessel from the inside of the closed vessel into an atmosphere with a pressure lower than the pressure inside the closed vessel to expand the resin particles that have undergone the holding step, thereby giving an expanded bead exhibiting the melting peak described above.

The expanded beads obtained in the manner as above can be expanded in multiple stages to give expanded beads with a higher expansion ratio (lower bulk density). For example, the expanded beads can be pressurized by air or the like to increase the pressure (inner pressure) inside the cells of the expanded beads, and then heated with steam or the like and further expanded (second-stage expansion) to give expanded beads having a higher expansion ratio (lower bulk density). From the viewpoint of producing a molded article having a low apparent density, it is preferable to carry out second-stage expansion.

<Expanded beads produced by production method>

The expanded beads produced by the method for producing expanded beads of the present invention have a bulk density of 10 kg/m$^3$ or more and 240 kg/m$^3$ or less.

The expanded beads produced by the method for producing expanded beads of the present invention are preferably expanded beads described in the section of [Expanded beads] below, and the same applies to more preferred expanded beads. In addition, the expanded beads described in the above section (Properties of mixed resin and expanded beads) are preferred, and the same applies to the more preferred expanded beads.

The expanded beads have a bulk density of 10 kg/m$^3$ or more and 240 kg/m$^3$ or less. The bulk density of the expanded beads is, from the viewpoint of enhancing the mechanical properties of the resultant molded articles, 10 kg/m$^3$ or more, preferably 13 kg/m$^3$ or more, more preferably 15 kg/m$^3$ or more. On the other hand, from the viewpoint of producing a molded article having a low apparent density, the bulk density of the expanded beads is 240 kg/m$^3$ or less, preferably 200 kg/m$^3$ or less, more preferably 100 kg/m$^3$ or less, still more preferably 80 kg/m$^3$ or less, and even more preferably 60 kg/m$^3$ or less.

As described later, the resultant expanded beads in the present invention can also be subjected to a pressurization treatment, followed by second-stage expansion, in which the expanded beads are heated with steam or the like to further cause expansion, to give expanded beads with an even higher expansion ratio (lower bulk density). From the viewpoint of producing a molded article having a low apparent density, it is preferable to carry out second-stage expansion.

In the case of carrying out second-stage expansion, the bulk density of the expanded beads after the first-stage expansion (before the second-stage expansion) is, from the viewpoint of stably producing expanded beads having a desired cell structure, preferably 60 kg/m$^3$ or more, more preferably 70 kg/m$^3$ or more, still more preferably 80 kg/m$^3$ or more. On the other hand, in the case of carrying out second-stage expansion, the bulk density of the expanded beads after the first-stage expansion (before the second-stage expansion) is, from the viewpoint of stably producing expanded beads having a low apparent density, preferably 240 kg/m$^3$ or less, preferably 200 kg/m$^3$ or less, more preferably 180 kg/m$^3$ or less, still more preferably 160 kg/m$^3$ or less.

Note that the bulk density can be measured according to the method described in the section of Examples.

[Expanded beads]

The expanded beads of the present invention are expanded beads having a bulk density of 10 kg/m$^3$ or more and 240 kg/m$^3$ or less, which contain a mixed resin of at least two linear low-density polyethylenes as a base resin, wherein the mixed resin has a density of 910 kg/m$^3$ or more and 928 kg/m$^3$ or less; the expanded beads have a biomass degree of 5% or more as measured according to ASTM D 6866; a melt flow rate of the expanded beads is 0.1 g/10 min or more and 3 g/10 min or less; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; and a heat of fusion at the high-temperature peak is 10 J/g or more and 50 J/g or less.

The expanded beads of the present invention are preferably produced by the above-described method for producing expanded beads, and the method for producing expanded beads of the present invention is preferably the above-described method for producing expanded beads.

(Mixed resin)

The expanded beads contain a mixed resin of at least two linear low-density polyethylenes as a base resin. In the present specification, "containing a mixed resin of at least two linear low-density polyethylenes as a base resin" means that the expanded beads are composed of a resin containing a mixed resin of at least two linear low-density polyethylenes as a main component.

The mixed resin of at least two linear low-density polyethylenes, which is the base resin of the expanded beads of the present invention, is preferably the mixed resin described in the section of <Linear low-density polyethylene (mixed resin)> described in the above-described method for producing expanded beads. Therefore, the mixed resin is preferably a mixed resin of at least two linear low-density polyethylenes, including linear low-density polyethylene A having a biomass degree of 50% or more as measured according to ASTM D 6866 and the linear low-density polyethylene B.

In addition, from the viewpoint of stably producing expanded particles excellent in in-mold moldability with a wide molding range to yield a good article, it is preferable that the at least two linear low-density polyethylenes are the linear low-density polyethylene A1 containing a butene component and an hexene component as copolymerization components (comonomer) and the linear low-density polyethylene B1 containing an octene component as a copolymerization component (comonomer).

The density of the mixed resin is preferably 910 kg/m$^3$ or more and 928 kg/m$^3$ or less, and from the viewpoint of easily producing expanded beads having desired physical properties, more preferably 912 kg/m$^3$ or more and 926 kg/m$^3$ or less, still more preferably 914 kg/m$^3$ or more and 925 kg/m$^3$ or less, even more preferably 916 kg/m$^3$ or more and 924 kg/m$^3$ or less. In addition, from the viewpoint of enabling in-mold molding under lower molding pressure conditions, the density of the mixed resin is preferably 917 kg/m$^3$ or more and 923 kg/m$^3$ or less.

The density of the mixed resin is measured by Method A (immersion method) described in JIS K 7112:1999. In the case of measuring the density of the mixed resin from the expanded beads, the expanded beads subjected to the defoaming treatment as measurement samples can be used for measurement of the above density to measure the density of the mixed resin. Specifically, the density can be measured according to the method described in the section of Examples.

<Properties and composition of expanded beads>

As described above, the expanded beads of the present invention are expanded beads having a bulk density of 10 kg/m$^3$ or more and 240 kg/m$^3$ or less, which contain a mixed resin of at least two linear low-density polyethylenes as a base resin, wherein the mixed resin has a density of 910 kg/m$^3$ or more and 928 kg/m$^3$ or less; the expanded beads have a biomass degree of 5% or more as measured according to ASTM D 6866; a melt flow rate of the expanded beads is 0.1 g/10 min or more and 3 g/10 min or less; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; and a heat of fusion at the high-temperature peak is 10 J/g or more and 50 J/g or less, and preferably have the following properties.

The expanded beads have a bulk density of 10 kg/m$^3$ or more and 240 kg/m$^3$ or less. The bulk density of the expanded beads is, from the viewpoint of enhancing the mechanical properties of the resultant molded articles, 10 kg/m$^3$ or more, preferably 13 kg/m$^3$ or more, more preferably 15 kg/m$^3$ or more. On the other hand, from the viewpoint of producing a molded article having a low apparent density, the bulk density of the expanded beads is 240 kg/m$^3$ or less, preferably 200 kg/m$^3$ or less, more preferably 100 kg/m$^3$ or less, still more preferably 80 kg/m$^3$ or less, even more preferably 60 kg/m$^3$ or less.

As described later, the resultant expanded beads in the present invention can also be subjected to a pressurization treatment, followed by second-stage expansion, in which the expanded beads are heated with steam or the like to further cause expansion, to give expanded beads with an even higher expansion ratio (lower bulk density). From the viewpoint of producing a molded article having a low apparent density, it is preferable to carry out second-stage expansion.

In the case of carrying out second-stage expansion, the bulk density of the expanded beads after the first-stage expansion (before the second-stage expansion) is, from the viewpoint of stably producing expanded beads having a desired cell structure, preferably 60 kg/m$^3$ or more, more preferably 70 kg/m$^3$ or more, still more preferably 80 kg/m$^3$ or more. On the other hand, in the case of carrying out second-stage expansion, the bulk density of the expanded beads after the first-stage expansion (before the second-stage expansion) is, from the viewpoint of stably producing expanded beads having a low apparent density, preferably 240 kg/m$^3$ or less, more preferably 200 kg/m$^3$ or less, still more preferably 180 kg/m$^3$ or less, even more preferably 160 kg/m$^3$ or less.

Note that the bulk density can be measured according to the method described in the section of Examples.

The expanded beads have a biomass degree of 5% or more as measured according to ASTM D 6866.

When the biomass degree of the expanded beads falls within the above range, the use of fossil resources can be suppressed in the production of the molded article, and the amount of carbon dioxide emitted in the life cycle of the molded article can also be reduced.

From the above viewpoint, the biomass degree of the expanded beads as measured according to ASTM D 6866 is 5% or more, preferably 10% or more, more preferably 20% or more, still more preferably 30% or more, even more preferably 40% or more. The upper limit is not limited, and the biomass degree of the expanded beads as measured according to ASTM D 6866 may be 100% or less. From the viewpoint of easily enhancing the in-mold moldability of the expanded beads, however, the biomass degree of the expanded beads as measured according to ASTM D 6866 is preferably 90% or less, more preferably 80% or less, still more preferably 70% or less, even more preferably 60% or less. The biomass degree is measured according to ASTM D 6866 and means the proportion of naturally-occurring components in the expanded beads. The biomass degree can be calculated by measuring the concentration of radiocarbon $C^{14}$ against the linear low-density polyethylene or from the biomass degree of biomass-derived resin used to produce the expanded beads and the content proportion of biomass-derived resin in the expanded beads.

The melt flow rate of the expanded beads (mixed resin constituting the expanded beads) measured under conditions of a temperature of 190°C and a load of 2.16 kg is 0.1 g/10 min or more and 3 g/10 min or less. When the melt flow rate of the expanded beads falls within the above range, the in-mold moldability of the expanded beads can be enhanced.

The melt flow rate of the expanded beads is preferably 0.3 g/10 min or more, more preferably 0.5 g/10 min or more, still more preferably 0.7 g/10 min or more. The melt flow rate of the expanded beads is preferably 2.0 g/10 min or less, more preferably 1.8 g/10 min or less, still more preferably 1.5 g/10 min or less, even more preferably 1.4 g/10 min or less.

Note that the melt flow rate of the expanded beads is a value measured under conditions of a temperature of 190°C and a load of 2.16 kg. More specifically, the melt flow rate can be measured according to JIS K 7210-1:2014 by the method described in the section of Examples. Note that the melt flow rate may be measured by using the expanded beads subjected to the defoaming treatment as measurement samples.

The expanded beads of the present invention have a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min, and a heat of fusion at the high-temperature peak is 10 J/g or more and 50 J/g or less.

The DSC curve is a DSC curve drawn in differential scanning calorimetry (DSC) according to JIS K 7122:2012. Specifically, using a differential scanning calorimeter, 1 to 3 mg of expanded beads of the present invention are heated from 23°C to 200°C at a heating rate of 10°C/min to draw the DSC curve.

As described above, the expanded beads of the present invention have a melting peak intrinsic to the linear low-density polyethylene (intrinsic peak) and at least one melting peak on a higher temperature side than the intrinsic peak (high-temperature peak) which appear on the DSC curve drawn by measurement of the expanded beads.

The expanded beads described in the section of [Expanded beads] of the present invention preferably have the range of the total heat of fusion, the range of the heat of fusion at the high-temperature peak, and the range of the ratio of the heat of fusion at the high-temperature peak to the total heat of fusion of the expanded beads produced by the method for producing expanded beads, and more preferred expanded beads are also the same.

The melting point of the expanded beads is, from the viewpoint of enhancing the mechanical properties of the resultant molded articles, preferably 100°C or higher and 130°C or lower. The melting point of the expanded beads is more preferably 110°C or higher, still more preferably 115°C or higher, even more preferably 118°C or higher. On the other hand, the melting point of the expanded beads is, from the viewpoint of enhancing the in-mold moldability of the expanded beads under a low molding pressure condition, preferably 128°C or lower, more preferably 126°C or lower.

The melting point of the expanded beads is measured based on JIS K 7121:2012 by using a test piece of the expanded beads thereof. Specifically, for the measurement, the method described in the section of Examples is referred to.

The volume percentage of closed cells in the expanded beads of the present invention is preferably 80% or more. When the volume percentage of closed cells in the expanded beads falls within the above range, the in-mold moldability of the expanded beads can be enhanced. The volume percentage of closed cells in the expanded beads of the present invention is preferably 85% or more, more preferably 88% or more, still more preferably 90% or more. Although the upper limit of the volume percentage of closed cells in the expanded beads of the present invention is not limited, it is preferably 99% or less, more preferably 98% or less, still more preferably 97% or less.

Note that the volume percentage of closed cells can be measured according to the method described in the section of Examples.

The average cell diameter of the expanded beads of the present invention is preferably 60 $\mu$m or more and 200 $\mu$m or less. When the average cell diameter of the expanded beads falls within the above range, the in-mold moldability of the expanded beads can be stably enhanced. The average cell diameter of the expanded beads of the present invention is preferably 70 $\mu$m or more, more preferably 80 $\mu$m or more, still more preferably 100 $\mu$m or more. The average cell diameter of the expanded beads of the present invention is preferably 180 $\mu$m or less, still more preferably 160 $\mu$m or less, even more preferably 140 $\mu$m or less.

In the case of carrying out second-stage expansion, the average cell diameter of the expanded beads after the first-stage expansion (before the second-stage expansion) is preferably 50 $\mu$m or more, more preferably 60 $\mu$m or more, still more preferably 70 $\mu$m or more. In the case of carrying out second-stage expansion, the average cell diameter of the expanded beads after the first-stage expansion (before the second-stage expansion) is preferably 120 $\mu$m or less, more preferably 110 $\mu$m or less, still more preferably 100 $\mu$m or less.

The average cell diameter can be determined by drawing plural line segments each running from the outermost surface of an expanded bead to the outermost surface on the opposite side thereof passing through the center part, on an enlarged picture of a cross section of an expanded bead divided into two, followed by dividing the number of the cells crossing each line segment by the total length of the line segment. Specifically, for the measurement, the method described in the section of Examples is referred to.

The average cell diameter of the expanded beads can be controlled to fall within a desired range, for example, by controlling the kind and the amount of the cell controlling agent to be added to the resin particles or by controlling the expanding temperature or the inner pressure of the pressure resistant vessel in expanding the resin particles.

The expanded beads are preferably non-crosslinked. The non-crosslinked structure makes it easier to recycle the expanded beads and reduce the environmental impact.

The term "non-crosslinked" as used herein means that the proportion of insoluble matter in the expanded beads determined by a thermal xylene extraction method is 5% by mass or less. From the viewpoint of facilitating the recycling of the expanded beads, the proportion of the insoluble matter in the expanded beads determined by the thermal xylene extraction method is preferably 3% by mass or less, most preferably 0% by mass.

The xylene insoluble matter in the expanded beads determined by thermal xylene extraction method can be measured as follows: first, about 1 g of precisely weighed expanded beads (exact mass thereof is represented by M (g)) are placed in a 150 mL round-bottomed flask, 100 mL of xylene is added thereto, and the mixture is heated with a mantle heater to reflux for 6 hours. Thereafter, the undissolved residue (insoluble matter) is separated by filtration through a 100-mesh wire gauze and dried in a vacuum dryer at 80°C for 8 hours or more. The mass m (g) of the dried product obtained by drying the residue is measured, and the proportion of m to M is expressed as a percentage, whereby the proportion of the xylene insoluble matter in the expanded beads can be determined.

An average mass per one bead (arithmetic average per one bead calculated by measuring the mass of 100 randomly chosen beads) of the expanded beads of the present invention is preferably 0.1 to 20 mg, more preferably 0.2 to 10 mg, still more preferably 0.3 to 5 mg, and even more preferably 0.4 to 2 mg. The average mass per one bead of the expanded beads can be calculated by measuring the mass of each of 100 randomly chosen expanded beads and then arithmetically averaging these masses.

Additives may be appropriately contained in the expanded beads of the present invention within a range not detracting from the advantageous effects of the present invention. Examples of the additives include an antioxidant, a UV absorbent, an antistatic agent, a flame retardant, a pigment, a dye and a cell controlling agent. For example, these additives can be contained in the expanded beads by adding them in a step of producing the resin particles. The additives contained in the expanded beads of the present invention are the same as the additives contained in the resin particles described in <Production of expanded beads> above.

The expanded beads of the present invention may contain a polymer such as a resin or an elastomer other than the linear low-density polyethylene within a range not detracting from the advantageous effects of the present invention. In this case, the content of the other polymer than the linear low-density polyethylene A and the linear low-density polyethylene B in the expanded beads is preferably 40 parts by mass or less, more preferably 30 parts by mass or less, still more preferably 20 parts by mass or less, even more preferably 10 parts by mass or less, particularly preferably 5 parts by mass or less, based on a total of 100 parts by mass of the linear low-density polyethylene A and the linear low-density polyethylene B. In addition, the content of the other polymer than the linear low-density polyethylene in the expanded beads is preferably 80 parts by mass or less, more preferably 50 parts by mass or less, still more preferably 30 parts by mass or less, even more preferably 20 parts by mass or less, particularly preferably 10 parts by mass or less, based on 100 parts by mass of linear low-density polyethylene (linear low-density polyethylene A or linear low-density polyethylene B) with a low content in the mixed resin.

The expanded beads of the present invention can have a fusion-bonding layer on the surface thereof for enhancing the fusion-bonding properties between the expanded beads during in-mold molding. The fusion-bonding layer may be present on the entire surface or a part of the surface of the expanded beads. Examples of the resin constituting the fusion-bonding layer include a crystalline polyolefin resin having a melting point lower than the melting point of the mixed resin constituting the expanded beads and an amorphous polyolefin resin having a softening point lower than the melting point of the mixed resin constituting the expanded beads.

The method for forming the fusion-bonding layer on the surface of the expanded beads is not particularly limited, and examples thereof include a method for expanding resin particles having a fusion-bonding layer on the surface and a method for adhering a fusion-bonding layer on the surface of expanded beads after obtaining the expanded beads. When resin particles having a fusion-bonding layer on the surface thereof are expanded to give expanded beads, it is preferable to employ a method of disposing a fusion-bonding layer on the surfaces of resin particles by co-extruding a resin melt for forming the resin particle body and a resin melt for forming the fusion-bonding layer using an extruding device capable of co-extrusion when producing resin particles.

As described above, the expanded beads of the present invention can be suitably used as expanded beads for in-mold molding. When the expanded beads of the present invention satisfy a specific relationship of the heat of fusion, the expanded beads are excellent in expandability at the time of second-stage expansion, and therefore, the expanded beads are also suitable as expanded beads for second-stage expansion.

On the other hand, the expanded beads of the present invention have appropriate flexibility and recovery properties by satisfying a specific relationship of the heat of fusion. Therefore, the expanded beads of the present invention can be suitably used, for example, as filler beads for cushioning materials. The filler beads are particulate fillers used to fill a bag to form a cushion material, and the expanded beads of the present invention can be particularly suitably used as filler beads for a bead cushion.

[Molded article of polyethylene-based resin expanded beads]

A molded article of polyethylene-based resin expanded beads can be obtained by in-mold molding of the expanded beads of the present invention or the expanded beads obtained by the method for producing expanded beads of the present invention.

In other words, the molded article of polypropylene-based resin expanded beads (hereinafter, also simply referred to as a molded article of expanded beads) is obtained by in-mold molding of the expanded beads.

The molded article of expanded beads can be formed by filling a mold with the expanded beads and heating them using a heating medium such as steam. Specifically, after expanded beads have been filled in a mold, a heating medium such as steam is introduced into the mold to fuse the expanded beads together, while heating and swelling (secondarily expanding) them, thereby forming a molded article of expanded beads given a shape of the molding space. Also in the in-mold molding in the present invention, the expanded beads can be molded according to a pressure molding method which is such that, after the pressure inside the expanded beads has been controlled to be higher by 0.01 to 0.3 MPa than the atmospheric pressure by previously pressurizing the expanded beads by air under pressure such as a gas to increase the pressure inside the cells of the expanded beads, the expanded beads are filled in a mold under atmospheric pressure or under reduced pressure, and thereafter a heating medium such as steam is introduced into the mold to heat and fuse the expanded beads (for example, JPS51-022951B). Also, the expanded beads can be molded according to a compression filling molding method which is such that expanded beads are filled in a mold that has been pressurized to have a higher pressure than atmospheric pressure using compressed gas, in which the expanded beads have been pressurized to have a higher pressure than the pressurized pressure inside the mold, and then heating is performed to introduce a heating medium such as steam into the cavity of the mold to heat and fuse the expanded beads (JPH04-046217B). In addition, the expanded beads can also be molded according to a normal pressure filling molding method in which expanded beads prepared under a specific condition to have a high secondary expanding force are filled in the cavity of a mold under atmospheric pressure or under reduced pressure, and then heating is performed to introduce a heating medium such as steam to heat and fuse expanded beads (JPH06-049795B), or according to a method of a combination of the above-mentioned methods (JPH06-022919B).

From the viewpoint of enhancing the mechanical properties, the density of the molded article of expanded beads is preferably 10 kg/m$^3$ or more, more preferably 13 kg/m$^3$ or more, and still more preferably 15 kg/m$^3$ or more. Also, from the viewpoint of obtaining a lightweight molded article, the density of the molded article of expanded beads is preferably 240 kg/m$^3$ or less, more preferably 200 kg/m$^3$ or less, still more preferably 100 kg/m$^3$ or less, even more preferably 80 kg/m$^3$ or less, and particularly preferably 60 kg/m$^3$ or less.

Note that the density of the molded article of expanded beads can be calculated by dividing the mass of the molded article of expanded beads by the volume to be calculated based on the dimension of the molded article of expanded beads and can be measured according to the method described in the section of Examples.

From the viewpoint of obtaining a molded article that exhibits good strength and flexibility, the ratio of the compression stress at 50% strain of the molded article of expanded beads to the density of the molded article of expanded beads is preferably 4 kPa/[kg/m$^3$] or more and 12 kPa/[kg/m$^3$] or less, more preferably 5 kPa/[kg/m$^3$] or more and 10 kPa/[kg/m$^3$] or less.

Note that the ratio of the compression stress at 50% strain of the molded article of expanded beads to the density of the molded article of expanded beads is calculated by dividing the stress at 50% strain measured by compressing the molded article of expanded beads as a test piece of 5 cm long × 5 cm wide × 2.5 cm height at a compression rate of 10 mm/min by the density, and can be measured and calculated according to the method described in the section of Examples.

The molded article of polyethylene-based resin expanded beads is lightweight and excellent in mechanical properties, and therefore can be used in applications of food transport containers, packaging/buffering materials for electric/electronic components, vehicle members such as automobile bumpers, building members such as residential heat insulating materials, and miscellaneous goods, as shock absorbing materials, heat insulating materials, various packaging materials and others.

Examples

Next, the present invention is described in further detail with reference to Examples, but the invention is not whatsoever restricted by these Examples.

[Measurement and evaluation]

The resins, expanded beads, and molded articles of expanded beads used in Examples and Comparative Examples were measured and evaluated as follows. Tables 3 and 4 showing the results of the measurements and evaluations and the production conditions are divided into Tables 3-1 and 3-2, and Tables 4-1 and 4-2, respectively. For evaluating the expanded beads and the molded articles of expanded beads, these were left and conditioned under the condition of a relative humidity of 50%, 23°C and 1 atm for 2 days, and then tested for evaluation.

<Biomass degree of polyethylene and biomass degree of expanded beads (mixed resin)>

The biomass degree of the polyethylene (linear low-density polyethylene, low-density polyethylene, or high-density polyethylene) used in Examples and Comparative Examples is a value determined by measuring the concentration of a radiocarbon $C^{14}$ according to ASTM D 6866. The biomass degree of the expanded beads (mixed resin) was calculated from the biomass degree of biomass-derived resin used to produce the expanded beads and the content proportion of biomass-derived resin in the expanded beads.

Note that in Table 1, LL1 is "SLH118" manufactured by Braskem, LL2 is "SLL118" manufactured by Braskem, and LL3 is "SLH218" manufactured by Braskem. LL1 to LL3 are polyethylenes listed in the positive list of biomass plastics in the Japan Biomass Plastics Association. In the positive list, LL1 and LL3 are described as linear low-density polyethylene represented by a chemical structural formula of $[(C_2H_4)_n(C_4H_8)_m(C_6H_{12})_o]$ and containing a butene component and an hexene component as copolymerization components, while LL2 is described as linear low-density polyethylene represented by a chemical structural formula of $[(C_2H_4)_n(C_4H_8)_m]$ and containing a butene component as a copolymerization component.

<Density of polyethylene and density of mixed resin>

The density of the polyethylene (linear low-density polyethylene, low-density polyethylene, or high-density polyethylene) used in Examples and Comparative Examples and the density of the mixed resin was measured based on Method A (immersion method) of JIS K 7112:1999.

In the measurement of the density of the mixed resin, the expanded beads were first subjected to a defoaming treatment by heat-pressing the expanded beads for 3 minutes with a heating press machine whose temperature was adjusted to 160°C, thereby preparing a resin sheet made of the mixed resin constituting the expanded beads. The density was measured using a pelleted sample obtained by cutting the resin sheet.

<Content of component derived from $\alpha$-olefin in linear low-density polyethylene>

The content of the component derived from each $\alpha$-olefin in linear low density polyethylene was determined by carbon-13 NMR spectroscopy ($^{13}$C-NMR).

First, the linear low-density polyethylene was dissolved in a mixed solvent of o-dichlorobenzene-d$_4$ (ODCB): benzene-d$_6$ ($C_6D_6$) = 4:1 (130°C) to prepare a 10 wt/vol% measurement solution. NMR ($^{13}$C-NMR) spectral measurement of the measurement solution with $^{13}$C as the measurement nucleus was conducted using "JEOL ECZ-400S model" as nuclear magnetic resonance spectrometer. Based on the chemical shift information in the resulting NMR spectra, the component derived from $\alpha$-olefin in the linear low-density polyethylene was identified while the content (mol%) thereof was calculated.

<Melt flow rate (MFR) of polyethylene and expanded beads (Mixed resin)>

The melt flow rate (MFR) of the polyethylene (linear low-density polyethylene, low-density polyethylene, or high-density polyethylene) used in Examples and Comparative Examples and the melt flow rate (MFR) of the expanded beads (mixed resin) of Examples and Comparative Examples were measured according to JIS K 7210-1:2014 under conditions of a temperature of 190°C and a load of 2.16 kg. In the measurement of the melt flow rate of the expanded beads, the expanded beads were first subjected to a defoaming treatment by heat-pressing the expanded beads for 3 minutes with a heating press machine whose temperature was adjusted to 160°C, thereby preparing a resin sheet made of the mixed resin constituting the expanded beads. The melt flow rate was measured using a pelleted sample obtained by cutting the resin sheet.

<Melting point of polyethylene and melting point of expanded beads (mixed resin)>

The melting point of polyethylene (linear low-density polyethylene, low-density polyethylene, or high-density polyethylene) used in Examples and Comparative Examples and the melting point of the expanded beads were measured by heat flux differential scanning calorimetry based on JIS K 7121:2012. A high-sensitive differential scanning calorimeter "EXSTAR DSC7020" (manufactured by SII Nano Technology Inc.) was used as the measurement apparatus. For condition control of the test piece, "(2) a case of measuring a melting temperature after predetermined heat treatment" was employed. About 2 mg of polyethylene or about 2 mg of expanded beads were sampled as a test piece, heated from 23°C to 200°C at a heating rate of 10°C/min under the condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve was read, and the value was referred to as the melting point.

Note that, in the case where multiple melting peaks appear in the DSC curve, the peak top temperature of the melting peak having the largest area is adopted as the melting point. At this time, by distinguishing each melting peak by the valley temperature of the DSC curve located between the peak top temperatures of their respective melting peaks and comparing the area (heat of fusion) of each melting peak, the melting peak having the largest area can be determined. The valley temperature of the DSC curve can also be determined from the temperature at which the value of the ordinate of the derivative curve of the DSC curve (DDSC) becomes 0, and thus can also be determined from the derivative curve of the DSC.

<Heat of fusion of polyethylene and total heat of fusion of expanded beads (mixed resin)>

The heat of fusion of the polyethylene (linear low-density polyethylene, low-density polyethylene, or high-density polyethylene) used in Examples and Comparative Examples and the total heat of fusion of the expanded beads (mixed resin) were measured according to JIS K 7122:2012.

First, using a test piece of polyethylene or expanded beads, DSC curves at the time of the second heating were drawn in the same manner as in the measurement of the melting point of polyethylene described above. The point at a temperature of 80°C on the obtained DSC curve at the time of second heating was defined as $\alpha$, and the point on the DSC curve corresponding to the end temperature of melting was defined as $\beta$. The area of the part surrounded by the DSC curve at an interval between the point $\alpha$ and the point $\beta$ and the line segment ($\alpha$-$\beta$) was measured, and the heat of fusion of polyethylene or the total heat of fusion of the expanded beads were calculated from the area.

<Heat of fusion at high-temperature peak of expanded beads>

The heat of fusion at the high-temperature peak of expanded beads were measured by heat flux differential scanning calorimetry according to JIS K 7122:2012. Specifically, about 2 mg of expanded beads were sampled as test pieces and heated from 23°C to 200°C at a heating rate of 10°C/min to draw a DSC curve (DSC curve in the first heating) having two or more melting peaks, using a differential scanning calorimeter (EXSTAR DSC7020). In the following description, an intrinsic peak of polyethylene (linear low-density polyethylene, low-density polyethylene, or high-density polyethylene) is represented by A, and a high-temperature peak appearing on the higher temperature side than it is represented by B.

A straight line connecting a point $\alpha$ corresponding to 80°C on the DSC curve and a point $\beta$ on the DSC curve corresponding to the melting end temperature T of the test pieces was drawn ($\alpha$-$\beta$). The melting end temperature T is an endpoint on the high temperature side at the high-temperature peak B, and is an intersection point of the high-temperature peak and the high-temperature side base line. Next, from the point $\gamma$ on the DSC curve equivalent to the valley between the intrinsic peak A and the high-temperature peak B, a straight line parallel to the vertical axis of the graph was drawn, and the point crossing the straight line ($\alpha$-$\beta$) was referred to as $\delta$.

The area of the part surrounded by the curve of the high-temperature peak B part on the DSC curve, the line segment ($\delta$-$\beta$), and the line segment ($\gamma$-$\delta$) was determined, and from this area, the heat of fusion at each high-temperature peak was calculated. The heat of fusion at the above high-temperature peak was measured for three different test pieces, and an arithmetic mean of the obtained values was used as the heat of fusion at the high-temperature peak of the expanded beads.

<Bulk density of expanded beads>

About 500 cm$^3$ of a group of expanded beads were filled in a measuring cylinder, and the bulk height of the group of expanded beads in the measuring cylinder was stabilized by lightly beating a few times the bottom of the measuring cylinder against the floor face. The bulk volume of the group of expanded beads that the scale of the measuring cylinder indicated was read, and this was referred to as V1 (L, liter). Next, the mass of the group of expanded beads was measured, and this was referred to as W1 [g].

The mass W1 [g] of the expanded beads was divided by the volume V1 thereof (W1/V1), and the unit thereof was

converted into [kg/m$^3$] to give the bulk density of the expanded beads.

<Volume percentage of closed cells in expanded beads>

The volume percentage of closed cells in expanded beads was measured as follows.

A group of expanded beads having a bulk volume of about 20 cm$^3$ was immersed in ethanol to measure the apparent volume Va of the group of expanded beads. Next, the group of expanded beads that had been measured for apparent volume Va was thoroughly dried. Then, the value Vx of a true volume of the group of expanded beads (the sum of the volume of the resin constituting the expanded beads and the total cell volume of the closed cell portion within the expanded beads) was measured according to Procedure C described in ASTM-D2856-70. The true volume Vx was measured using an air comparison pycnometer 930 type (manufactured by Toshiba-Beckman Co., Ltd.). Subsequently, the volume percentage of closed cells was calculated according to expression (1) given below, and the arithmetic mean of five measurement results using different groups of expanded beads was determined.

$$\text{Volume percentage of closed cells (\%)} = (\text{Vx-W/}\rho) \times 100/(\text{Va-W/}\rho) \qquad (1)$$

Vx: True volume (cm$^3$) of a group of expanded beads as measured by the method above
Va: Apparent volume (cm$^3$) of a group of expanded beads as measured from the rise in water level when the group of expanded beads is submerged in ethanol in a measuring cylinder
W: Mass (g) of group of expanded beads
$\rho$: Density (g/cm$^3$) of resin constituting expanded beads

<Average cell diameter of expanded beads>

The average cell diameter of expanded beads was measured as follows.

30 expanded beads were randomly chosen from a group of expanded beads. The expanded bead was cut into two portions in such a manner that the cutting line could pass through the center part thereof, and an enlarged photograph of one cross section of every bead was taken. On every cross section photograph, four line segments were drawn from the outermost surface on one side of the expanded bead to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the cell diameter of each expanded bead, and the found data were arithmetically averaged to give an average cell diameter of the expanded beads.

<Ratio of bulk density of first-stage expanded bead to bulk density of second-stage expanded bead>

The bulk density of first-stage expanded beads and the bulk density of second-stage expanded beads were measured according to the bulk density measurement method described above. The bulk density of the first-stage expanded beads was divided by the bulk density of the second-stage expanded beads to calculate the ratio of the bulk density of the first-stage expanded beads to the bulk density of the second-stage expanded beads (bulk density$_{\text{(first-stage expansion)}}$/bulk density$_{\text{(second-stage expansion)}}$). Note that the larger the value of the ratio, the better expandability of the second-stage expansion since the second-stage expanded beads having a low bulk density can be obtained.

<State of second-stage expanded beads>

The surface state of the second-stage expanded bead was visually observed. The case where the expanded beads had no distinct wrinkles with little shrinkage of the expanded beads observed was evaluated as "good", and the case where the expanded beads had distinct wrinkles with much shrinkage of the expanded beads observed was evaluated as "bad".

In the case where the above evaluation is "good", there is little variation in density between the resulting second-stage expanded beads, making it easy to control the density of the expanded beads when producing the desired molded article, while the expanded beads stably express good in-mold moldability.

<Molding pressure range capable of molding good article>

A molded article of expanded beads was molded by changing the molding pressure (molding steam pressure) by 0.01 MPa between 0.10 and 0.20 MPa (G) according to the method described later in <Production of molded article of expanded beads>, and in-mold moldability of the resulting molded article was evaluated with respect to the following items: fusion-bonding properties, surface appearance (gap = degree of voids), recovery properties (recovery properties of swelling or shrinkage after in-mold molding). The molded article that met the criteria described below was considered to be a pass, and the steam pressure at which all items were passed was considered to be a moldable steam pressure. Note that the pressure with (G) is a gauge pressure, that is, a pressure value based on atmospheric pressure.

A wider range from the lower limit to the upper limit of the moldable steam pressure is more suitable for a wider moldable range. In addition, a molded article that can be molded even under a low steam pressure condition is suitable because it can reduce the amount of steam required for molding and has excellent productivity.

(Fusion bonding properties)

The molded article of expanded beads were bent and broken, and the number (C1) of expanded beads present on the broken surface and the number (C2) of broken expanded beads were determined. The ratio of the number of the broken expanded beads to the number of the above expanded beads (C2/C1 × 100) was calculated as the material fracture rate. The measurement was taken five times using different test pieces to determine the material fracture rate of each test piece. A material fracture rate of 80% or more based on the arithmetic mean of the measurement results was considered to be a pass, while a material fracture rate of less than 80% was considered to be a fail.

(Surface appearance)

On the central part of the molded article of expanded beads, a square of 100 mm × 100 mm was drawn, diagonal lines were drawn from the corners of the square area, and the number of voids (gaps) with a size of 1 mm × 1 mm or larger on these lines was counted. The case where the number of voids was less than 5 without surface irregularities was considered to be a pass, and the other cases were considered to be a fail.

(Recovery property)

The thicknesses near the four corners (10 mm inward from the corners in the center direction) and the thickness at the center part (intersection portion between the line dividing the molded article into two equal parts in the longitudinal direction and the line dividing the molded article into two equal parts in the lateral direction) of a flat plate-shaped molded article of expanded beads having a length of 250 mm, a width of 200 mm, and a thickness of 50 mm obtained by in-mold molding were each measured. The ratio (%) of the thickness of the center part to the thickness of the thickest part near the four corners was then calculated. A ratio of 95% or more was considered to be a pass, while a ratio of less than 95% was considered to be a fail.

<Density of molded article of expanded beads>

A molded article of expanded beads was left under the condition of a relative humidity of 50%, 23°C, and 1 atm for 2 days. Next, the mass thereof was measured and was referred to as W [g].

Next, based on the dimension of the molded article of expanded beads, the volume V [cm$^3$] of the molded article of expanded beads was measured.

The mass W [g] of the molded article of expanded beads was divided by the volume V thereof (W/V), and the unit was converted into [kg/m$^3$] to determine the density of the molded article of expanded beads.

<Compression stress at 50% strain of molded article of expanded beads>

Test pieces of 5 cm long × 5 cm wide × 2.5 cm height were sampled from the molded articles obtained in Examples and Comparative Examples, and the test pieces were compressed at a compression rate of 10 mm/min to measure the stress at 50% strain. The higher the stress, the better the strength of the molded article of expanded beads. Note that the test pieces were sampled from a molded article molded at the lower limit of the moldable steam pressure.

The resulting compression stress at 50% strain was divided by the density to calculate the ratio of the compression stress at 50% strain of the molded article of expanded beads to the density of the molded article of expanded beads. If the ratio is 4 kPa/[kg/m$^3$] or more and 12 kPa/[kg/m$^3$] or less, which is preferred. If the ratio is 5 kPa/[kg/m$^3$] or more and 10 kPa/[kg/m$^3$] or less, the balance between strength and flexibility is good, which is more preferred.

[Polyethylene]

The polyethylene (linear low-density polyethylene, low-density polyethylene, or high-density polyethylene) used in Examples and Comparative Examples are shown in Tables 1 and 2.

Table 1

| | | LL1 | LL2 | LL3 | LL4 | LL5 | LL6 |
|---|---|---|---|---|---|---|---|
| Resin symbol | | | | | | | |
| Resin type | | Linear low-density polyethylene | Linear low-density polyethylene | Linear low-density polyethylene | Linear low-density polyethylene | Linear low-density polyethylene | Linear low-density polyethylene |
| Principal comonomer species in LLDPE | | C6/C4 | C4 | C6/C4 | C8 | iC6 | C4 |
| Comonomer content (α-olefin component) (mol%) | C3 (propylene) | 1.6 | 1.6 | 1.6 | - | - | - |
| | C4 (butene-1) | 3.1 | 4.6 | 3.1 | - | - | 2.4 |
| | C6 (hexene-1) | 1.4 | - | 1.4 | - | - | - |
| | C8 (octene-1) | - | - | - | 1.8 | - | - |
| | iC6 (4-methylpentene) | - | - | - | - | 1.9 | - |
| Biomass degree | [%] | 84 | 87 | 84 | 0 | 0 | 0 |
| Density (ρ) | [kg/m³] | 916 | 916 | 916 | 926 | 927 | 925 |
| MFR | [g/10min] | 1.0 | 1.0 | 2.3 | 1.0 | 2.3 | 8.0 |
| Melting point (Tm) | [°C] | 124 | 123 | 123 | 121 | 123 | 124 |
| Heat of fusion (ΔH) | [J/g] | 83 | 80 | 80 | 113 | 104 | 110 |

Table 2

| Resin symbol | | LD1 | HD1 | HD2 | HD3 | HD4 | HD5 | HD6 |
|---|---|---|---|---|---|---|---|---|
| Resin type | | Low-density polyethylen e | High-density polyethylen e | High-density polyethylen e | High-density polyethylen e | High-density polyethylen e | High-density polyethylen e | High-density polyethylen e |
| Biomass degree | [%] | 95 | 0 | 94 | 0 | 94 | 94 | 0 |
| Density (ρ) | [kg/m³] | 924 | 956 | 948 | 955 | 955 | 954 | 950 |
| MFR | [g/10min] | 0.6 | 0.4 | 1.0 | 7.9 | 7.2 | 4.5 | 5.0 |
| Melting point (Tm) | [°C] | 111 | 132 | 133 | 133 | 133 | 133 | 133 |
| Heat of fusion (ΔH) | [J/g] | 105 | 227 | 179 | 230 | 200 | 230 | 190 |

[Production of expanded beads and molded article of expanded beads]

(Example 1)

<Production of expanded beads>

An extruder having an inner diameter of 26 mm, attached with a strand-forming die on the discharge side, was prepared.

LL1, LL4, and zinc borate as a cell controlling agent (number-based arithmetic average particle diameter: 7 $\mu$m) were put into the extruder, melted, and kneaded to form a resin melt composed of the mixed resin. LL1 and LL4 were fed in the proportions shown in Table 3, and zinc borate was fed so that the content of zinc borate in the expanded beads could be 500 ppm by mass.

The resultant resin melt was extruded out as strands through the strand-forming die, and the extruded strands were cooled in water, and pelletized with a pelletizer, thus giving resin particles having an average mass per particle of 1.5mg, an particle diameter of 1.9 mm, and a length/diameter ratio of 1.9, using a mixed resin of two linear low-density polyethylenes as the base resin.

500 g of the resin particles, 3.5 L of water as a dispersing medium, 3 g of kaolin as a dispersant, and 0.2 g of sodium dodecylbenzenesulfonate (trade name: Neogen, by DKS Co., Ltd.) as a surfactant were charged into a 5-L closed vessel.

Next, carbon dioxide as a blowing agent was injected under pressure into the closed vessel, which was then pressurized up to an equilibrium vapor pressure shown in Table 3. Next, while stirred, the contents in the closed vessel were heated up to an expanding temperature shown in Table 3 at a heating rate of 2°C/min. Further, this was kept at the temperature for 15 minutes (holding step). Through this holding step, a heat of fusion (derived from the endothermic curve in DSC measurement) at high-temperature peak was controlled. Thereafter, the contents in the closed vessel were depressurized under atmospheric pressure to give expanded beads (first-stage expanded beads).

The expanded beads obtained as described above were allowed to cure by leaving it in an environment with a temperature of 23°C, a relative humidity of 50%, and 1 atm for 24 hours. Subsequently, the expanded beads after the curing were filled in a pressure resistance closed vessel, and the pressure in the closed vessel was raised from ambient pressure to pressurize the expanded beads. By maintaining the expanded beads in a pressurized state for 24 hours, cells of the expanded beads were impregnated with air. Thereafter, the expanded beads were removed from the closed vessel to obtain expanded beads in which the internal pressure of cells of the expanded beads was 0.5 MPa (G). Subsequently, the expanded beads were transferred into a second-stage expanding device. Steam was supplied into the device to secondarily expand the expanded beads to give expanded beads (second-stage expanded beads). The expanded beads after the second-stage expansion was used for the measurements described above and the production of a molded article of expanded beads.

<Production of molded article of expanded beads>

After an internal pressure of 0.25 MPa (G) was applied with air to expanded beads, the expanded beads were filled into a mold capable of molding a flat plate with 250 mm long × 200 mm wide × 50 mm thick and then heated by the following heating method.

First, pre-heating (exhaust step) was carried out by supplying steam to the mold in the state where drain valves provided on both sides of the mold were open. Thereafter, steam was supplied from one side of the mold for heating, and then steam was supplied from the other side of the mold for further heating. Subsequently, the mold was heated by supplying steam from both sides of the mold at the predetermined molding heating steam pressure (main heating). After completion of the main heating, the mold was depressurized and cooled with water until the pressure generated on the molding surface of the mold could reach 0.04 MPa(G), and then the mold was opened to remove the molded article of expanded beads.

The obtained molded article was cured in an oven at 80°C for 12 hours to give a molded article of expanded beads. In the aforementioned evaluation of <Molding pressure range capable of molding good article>, molding was carried out by changing the molding pressure.

The measurement results of physical properties of the resultant expanded beads and the evaluation results of the molded article of expanded beads are shown in Table 3. In addition, each expanded bead is a non-crosslinked expanded bead.

(Examples 2 to 8 and 11)

Expanded beads and molded articles of expanded beads were produced in the same manner as in Example 1, except that the polyethylene, proportion thereof, expanding temperature, and equilibrium vapor pressure in Example 1 were changed to the conditions shown in Table 3. The measurement results of physical properties of the resultant expanded beads and the evaluation results of the molded article of expanded beads are shown in Table 3.

(Examples 9 and 10)

Expanded beads and molded articles of expanded beads were produced in the same manner as in Example 1, except that the expanding temperature and equilibrium vapor pressure in Example 1 were changed to the conditions shown in Table 3 and that in-mold molding was carried out using the resulting first-stage expanded beads. The measurement results of physical properties of the resultant expanded beads and the evaluation results of the molded article of expanded beads are shown in Table 3.

(Comparative Examples 1 to 8)

Expanded beads and molded articles of expanded beads were produced in the same manner as in Example 1, except that the polyethylene, proportion thereof, expanding temperature, and equilibrium vapor pressure in Example 1 were changed to the conditions shown in Table 4. The measurement results of physical properties of the resultant expanded beads and the evaluation results of the molded article of expanded beads are shown in Table 4.

(Comparative Examples 9 and 10)

Expanded beads and molded articles of expanded beads were produced in the same manner as in Example 1, except that the polyethylene, proportion thereof, and expanding temperature in Example 1 were changed to the conditions shown in Table 4 and that in-mold molding was carried out using the resulting first-stage expanded beads. The measurement results of physical properties of the resultant expanded beads and the evaluation results of the molded article of expanded beads are shown in Table 4.

Table 3-1

| | | | | Example 1 | Example 2 | Example 3 | Example 4 | Example 5 |
|---|---|---|---|---|---|---|---|---|
| Properties of raw material | LLDPE A | Type | - | LL1 | LL1 | LL2 | LL3 | LL1 |
| | | $MFR_A$ | g/10 min | 1.0 | 1.0 | 1.0 | 2.3 | 1.0 |
| | | Biomass degree | % | 84 | 84 | 87 | 84 | 84 |
| | | Proportion | % | 60 | 60 | 60 | 60 | 60 |
| | LLDPE B | Type | - | LL4 | LL4 | LL4 | LL4 | LL5 |
| | | $MFR_B$ | g/10 min | 1.0 | 1.0 | 1.0 | 1.0 | 2.3 |
| | | Proportion (%) | % | 40 | 40 | 40 | 40 | 40 |
| | $[MFR_A]-[MFR_B]$ | | g/10 min | 0 | 0 | 0 | 1.3 | -1.3 |
| | $[Tm_A]-[Tm_B]$ | | °C | 3 | 3 | 2 | 2 | 1 |
| | $[\rho_A]-[\rho_B]$ | | kg/m$^3$ | -10 | -10 | -10 | -10 | -11 |
| | $[\Delta H_B]-[\Delta H_A]$ | | J/g | 30 | 30 | 33 | 33 | 21 |
| Expanding temperature | | | °C | 123.1 | 122.5 | 122.5 | 123.1 | 123.9 |
| COz equilibrium vapor pressure | | | MPa(G) | 4.0 | 4.0 | 4.0 | 4.0 | 4.0 |
| Expanded bead(s) (mixed resin) | (A) Total heat of fusion | | J/g | 96 | 96 | 90 | 96 | 93 |
| | (B) Heat of fusion at high-temperature peak | | J/g | 30 | 40 | 30 | 30 | 30 |
| | (B)/(A) | | - | 0.31 | 0.42 | 0.33 | 0.31 | 0.32 |
| | Biomass degree | | % | 50 | 50 | 52 | 50 | 50 |
| | MFR(190°C, 2.16kg) | | g/10min | 1.0 | 1.0 | 1.0 | 1.7 | 1.5 |
| | Melting point | | °C | 122 | 122 | 122 | 122 | 123 |
| | Density of mixed resin | | kg/m$^3$ | 920 | 920 | 920 | 920 | 920 |
| | Bulk density of first-stage expanded beads | | kg/m$^3$ | 131 | 184 | 135 | 108 | 123 |
| | Volume percentage of closed cells in first-stage expanded beads | | % | 97 | 98 | 94 | 94 | 94 |

(continued)

|  |  |  | Example 1 | Example 2 | Example 3 | Example 4 | Example 5 |
|---|---|---|---|---|---|---|---|
|  | Average cell diameter of first-stage expanded beads | μm | 100 | 90 | 110 | 110 | 90 |
|  | Bulk density of second-stage expanded beads | kg/m$^3$ | 21 | 37 | 24 | 20 | 24 |
|  | Volume percentage of closed cells in second-stage expanded beads | % | 93 | 90 | 92 | 90 | 90 |
|  | Average cell diameter of second-stage expanded beads | μm | 155 | 145 | 160 | 150 | 110 |
|  | Bulk density$_{(first-stage\ expansion)}$/bulk density$_{(second-stage\ expansion)}$ | - | 6.3 | 5.0 | 5.6 | 5.3 | 5.1 |
|  | State of second-stage expanded beads | - | Good | Good | Good | Good | Good |
| Molded article of expanded beads | Molded article density | kg/m$^3$ | 26 | 45 | 30 | 25 | 30 |
|  | Molding range to yield good article (lower limit-upper limit of steam pressure) | MPa(G) | 0.13-0.16 | 0.13-0.17 | 0.13-0.14 | 0.13-0.14 | 0.13-0.14 |
|  | Compression stress at 50% strain | kPa | 143 | 231 | 158 | 139 | 158 |
|  | Compression stress at 50% strain/density | kPa/[kg/ m$^3$] | 5.5 | 5.1 | 5.3 | 5.6 | 5.3 |

Table 3-2

| | | | | Example 6 | Example 7 | Example 8 | Example 9 | Example 10 | Example 11 |
|---|---|---|---|---|---|---|---|---|---|
| Properties of raw material | LLDPE A | Type | - | LL1 | LL1 | LL1 | LL1 | LL1 | LL1 |
| | | $MFR_A$ | g/10 min | 1.0 | 1.0 | 1.0 | 1.0 | 1.0 | 1.0 |
| | | Biomass degree | % | 84 | 84 | 84 | 84 | 84 | 84 |
| | | Proportion | % | 30 | 20 | 90 | 60 | 60 | 60 |
| | LLDPE B | Type | - | LL4 | LL4 | LL4 | LL4 | LL4 | LL3 |
| | | $MFR_B$ | g/10 min | 1.0 | 1.0 | 1.0 | 1.0 | 1.0 | 2.3 |
| | | Proportion (%) | % | 70 | 80 | 10 | 40 | 40 | 40 |
| | $[MFR_A]-[MFR_B]$ | | g/10 min | 0 | 0 | 0 | 0 | 0 | -1.3 |
| | $[Tm_A]-[Tm_B]$ | | °C | 3 | 3 | 3 | 3 | 3 | 1 |
| | $[\rho_A]-[\rho_B]$ | | kg/m³ | -10 | -10 | -10 | -10 | -10 | 0 |
| | $[\Delta H_B]-[\Delta H_A]$ | | J/g | 30 | 30 | 30 | 30 | 30 | 3 |
| Expanding temperature | | | °C | 122.6 | 122.7 | 123.5 | 123.1 | 124.7 | 124.2 |
| $CO_2$ equilibrium vapor pressure | | | MPa (G) | 4.0 | 4.0 | 4.0 | 4.0 | 3.5 | 4.0 |
| Expanded bead(s) (mixed resin) | (A) Total heat of fusion | | J/g | 100 | 99 | 85 | 96 | 96 | 83 |
| | (B) Heat of fusion at high-temperature peak | | J/g | 30 | 30 | 30 | 30 | 15 | 35 |
| | (B)/(A) | | - | 0.30 | 0.30 | 0.35 | 0.31 | 0.16 | 0.42 |
| | Biomass degree | | % | 25 | 17 | 76 | 50 | 50 | 84 |
| | MFR(190°C, 2.16kg) | | g/10 min | 1.0 | 1.0 | 1.0 | 1.0 | 1.0 | 1.4 |
| | Melting point | | °C | 122 | 121 | 123 | 122 | 122 | 122 |
| | Density of mixed resin | | kg/m³ | 923 | 924 | 917 | 920 | 920 | 916 |
| | Bulk density of first-stage expanded beads | | kg/m³ | 123 | 115 | 153 | 131 | 131 | 100 |

(continued)

| | | | Example 6 | Example 7 | Example 8 | Example 9 | Example 10 | Example 11 |
|---|---|---|---|---|---|---|---|---|
| | Volume percentage of closed cells in first-stage expanded beads | % | 98 | 97 | 96 | 97 | 91 | 95 |
| | Average cell diameter of first-stage expanded beads | $\mu$m | 90 | 85 | 110 | 100 | 120 | 83 |
| | Bulk density of second-stage expanded beads | kg/m$^3$ | 24 | 20 | 23 | | | 22 |
| | Volume percentage of closed cells in second-stage expanded beads | % | 93 | 91 | 93 | | | 90 |
| | Average cell diameter of second-stage expanded beads | $\mu$m | 135 | 140 | 155 | - | - | 120 |
| | Bulk density$_{(first-stage\ expansion)}$/bulk density$_{(second-stage\ expansion)}$ | - | 5.1 | 5.8 | 6.7 | | | 4.5 |
| | State of second-stage expanded beads | - | Good | Good | Good | | | Good |
| Molded article of expanded beads | Molded article density | kg/m$^3$ | 30 | 25 | 28 | 161 | 160 | 28 |
| | Molding range to yield good article (lower limit-upper limit of steam pressure) | MPa (G) | 0.13-0.15 | 0.14-0.17 | 0.13-0.15 | 0.13-0.17 | 0.13-0.14 | 0.14-0.16 |
| | Compression stress at 50% strain | kPa | 151 | 129 | 154 | 1277 | 1270 | 125 |
| | Compression stress at 50% strain/density | kPa/[kg/m$^3$] | 5.0 | 5.1 | 5.5 | 7.9 | 7.9 | 4.5 |

Table 4-1

| | | | Unit | Comparative Example 1 | Comparative Example 2 | Comparative Example 3 | Comparative Example 4 | Comparative Example 5 |
|---|---|---|---|---|---|---|---|---|
| Properties of raw material | LLDPE A | Type | - | LL1 | LL1 | HD2 | LL3 | HD4 |
| | | $MFR_A$ | g/10 min | 1.0 | 1.0 | 1.0 | 2.3 | 7.2 |
| | | Biomass degree | % | 84 | 84 | 94 | 84 | 94 |
| | | Proportion | % | 60 | 60 | 60 | 34.5 | 32 |
| | LLDPE B | Type | - | HD1 | LD1 | LL4 | HD3 | HD1 |
| | | $MFR_B$ | g/10 min | 0.4 | 1.0 | 1.0 | 7.9 | 0.4 |
| | | Proportion (%) | % | 40 | 40 | 40 | 65.5 | 68 |
| | | $[MFR_A]-[MFR_B]$ | g/10 min | 0.6 | 0 | 0 | -5.6 | 6.8 |
| | | $[Tm_A]-[Tm_B]$ | °C | -9 | 13 | 12 | -10 | 1 |
| | | $[\rho_A]-[\rho_B]$ | kg/m³ | -40 | -8 | 22 | -39 | -1 |
| | | $[\Delta H_B]-[\Delta H_A]$ | J/g | 144 | 22 | 66 | 150 | 27 |
| Expanding temperature | | | °C | 128.5 | 119.2 | 130.5 | 131.6 | 133.4 |
| $CO_2$ equilibrium vapor pressure | | | MPa (G) | 4.0 | 4.0 | 4.0 | 4.0 | 4.0 |
| (A) Total heat of fusion | | | J/g | 95 | 62 | 110 | 151 | 190 |
| (B) Heat of fusion at high-temperature peak | | | J/g | 30 | 30 | 30 | 30 | 30 |
| (B)/(A) | | | - | 0.32 | 0.48 | 0.27 | 0.20 | 0.16 |
| Biomass degree | | | % | 50 | 88 | 56 | 29 | 30 |
| MFR(190°C, 2.16kg) | | | g/10min | 0.8 | 1.0 | 1.0 | 6.0 | 2.6 |
| Melting point | | | °C | 127 | 116 | 128 | 127 | 132 |
| Density of mixed resin | | | kg/m³ | 932 | 919 | 939 | 942 | 956 |
| Bulk density of first-stage expanded beads | | | kg/m³ | 263 | 92 | 230 | 240 | 240 |

(continued)

| | | Comparative Example 1 | Comparative Example 2 | Comparative Example 3 | Comparative Example 4 | Comparative Example 5 |
|---|---|---|---|---|---|---|
| Expanded bead(s) (mixed resin) | Volume percentage of closed cells in first-stage expanded beads | % | 96 | 90 | 85 | 90 | 95 |
| | Average cell diameter of first-stage expanded beads | μm | 80 | 120 | 95 | 80 | 80 |
| | Bulk density of second-stage expanded beads | kg/m³ | 92 | 23 | 224 | 240 | 240 |
| | Volume percentage of closed cells in second-stage expanded beads | % | 90 | 90 | 89 | 95 | 95 |
| | Average cell diameter of second-stage expanded beads | μm | 110 | 150 | 95 | 95 | 95 |
| | Bulk density$_{(first-stage expansion)}$/bulk density$_{(second-stage expansion)}$ | - | 2.9 | 4.0 | 1.0 | 1.0 | 1.0 |
| | State of second-stage expanded beads | - | Good | Bad | Good | Good | Good |
| Molded article of expanded beads | Molded article density | kg/m³ | 113 | 28 | 275 | 294 | 294 |
| | Molding range to yield good article (lower limit-upper limit of steam pressure) | MPa (G) | None | None | 0.18 | 0.18 | 0.18 |
| | Compression stress at 50% strain | kPa | - | - | 4500 | 4700 | 4800 |
| | Compression stress at 50% strain/density | kPa[kg/m³] | - | - | 16 | 16 | 16 |

33

Table 4-2

| | | | unit | Comparative Example 6 | Comparative Example 7 | Comparative Example 8 | Comparative Example 9 | Comparative Example 10 |
|---|---|---|---|---|---|---|---|---|
| Properties of raw material | LLDPE A | Type | - | HD5 | LL1 | LL1 | HD2 | LL3 |
| | | $MFR_A$ | g/10 min | 4.5 | 1.0 | 1.0 | 1.0 | 2.3 |
| | | Biomass degree | % | 94 | 84 | 84 | 94 | 84 |
| | | Proportion | % | 60 | 60 | 60 | 60 | 34.5 |
| | LLDPE B | Type | - | HD6 | LL6 | LL4 | LL4 | HD3 |
| | | $MFR_B$ | g/10 min | 5.0 | 8.0 | 1.0 | 1.0 | 7.9 |
| | | Proportion (%) | % | 40 | 40 | 40 | 40 | 65.5 |
| | | $[MFR_A]-[MFR_B]$ | g/10 min | -0.5 | -7.0 | 0 | 0 | -5.6 |
| | | $[Tm_A]-[Tm_B]$ | °C | 0 | 0 | 3 | 12 | -10 |
| | | $[\rho_A]-[\rho_B]$ | kg/m³ | 4 | -9 | -10 | 22 | -39 |
| | | $[\Delta H_B]-[\Delta H_A]$ | J/g | -40 | 27 | 30 | 66 | 150 |
| | | Expanding temperature | °C | 133.3 | 124.5 | 125.0 | 130.5 | 131.6 |
| | | $CO_2$ equilibrium vapor pressure | MPa (G) | 4.0 | 4.0 | 3.0 | 4.0 | 4.0 |
| | | (A) Total heat of fusion | J/g | 180 | 80 | 96 | 110 | 151 |
| | | (B) Heat of fusion at high-temperature peak | J/g | 30 | 30 | 5 | 30 | 30 |
| | | (B)/(A) | - | 0.17 | 0.38 | 0.05 | 0.27 | 0.20 |
| | | Biomass degree | % | 56 | 50 | 50 | 56 | 29 |
| | | MFR(190°C, 2.16kg) | g/IOmin | 4.7 | 3.8 | 1.0 | 1.0 | 6.0 |
| | | Melting point | °C | 133 | 124 | 124 | 128 | 125 |
| | | Density of mixed resin | kg/m³ | 952 | 920 | 920 | 939 | 942 |
| | | Bulk density of first-stage expanded beads | kg/m³ | 240 | 131 | 131 | 230 | 240 |
| Expanded bead(s) (mixed resin) | | Volume percentage of closed cells in first-stage expanded beads | % | 95 | 90 | 85 | 85 | 90 |

|  |  |  | Comparativ e Example 6 | Comparativ e Example 7 | Comparativ e Example 8 | Comparativ e Example 9 | Comparativ e Example 10 |
|---|---|---|---|---|---|---|---|
|  | Average cell diameter of first-stage expanded beads | $\mu$m | 80 | 120 | 125 | 95 | 80 |
|  | Bulk density of second-stage expanded beads | kg/m$^3$ | 245 | 23 | 12 | - | - |
|  | Volume percentage of closed cells in second-stage expanded beads | % | 95 | 85 | 75 |  |  |
|  | Average cell diameter of second-stage expanded beads | $\mu$m | 95 | 150 | 190 |  |  |
|  | Bulk density$_{(first-stage expansion)}$/bulk density$_{(second-stage expansion)}$ | - | 0.98 | 5.7 | 11 |  |  |
|  | State of second-stage expanded beads | - | Good | Bad | Bad |  |  |
| Molded article of expanded beads | Molded article density | kg/m$^3$ | 300 | 28 | 15 | 275 | 294 |
|  | Molding range to yield good article (lower limit-upper limit of steam pressure) | MPa (G) | 0.18 | None | None | 0.18 | 0.18 |
|  | Compression stress at 50% strain | kPa | 4800 | - | - | 4500 | 4700 |
|  | Compression stress at 50% strain/density | kPa/[kg /m$^3$] | 16 | - | - | 16 | 16 |

EP 4 502 024 A1

From the results shown in Table 3, it is known that the expanded beads of Examples have a high biomass degree and are excellent in in-mold moldability. It is further known that the expanded beads of Examples can be molded in a mold under a low molding pressure condition and have a wide molding range to yield a good article. Also, it is known that a molded article of polyethylene-based resin expanded beads having a low apparent density can be favorably obtained by using the expanded beads of Examples. It is further known that the molded article of polyethylene-based resin expanded beads produced by using the expanded beads of Examples has a high compression stress and excellent balance between strength and flexibility in spite of a low apparent density.

**Claims**

1.  A method for producing expanded beads having a bulk density of 10 kg/m$^3$ or more and 240 kg/m$^3$ or less by expanding resin particles comprising, as a base resin, a mixed resin of at least two linear low-density polyethylenes, wherein

     the mixed resin comprises linear low-density polyethylene A having a biomass degree of 50% or more as measured according to ASTM D 6866 and linear low-density polyethylene B;
     a melt flow rate MFR$_A$ of the linear low-density polyethylene A measured under conditions of a temperature of 190°C and a load of 2.16 kg is 0.1 g/10 min or more and 3 g/10 min or less;
     a difference |MFR$_A$ - MFR$_B$| between the melt flow rate MFR$_A$ of the linear low-density polyethylene A and a melt flow rate MFR$_B$ of the linear low-density polyethylene B measured under conditions of a temperature of 190°C and a load of 2.16 kg is 0 g/10 min or more and 2 g/10 min or less;
     a mass ratio A/B of the linear low-density polyethylene A to the linear low-density polyethylene B in the mixed resin is 5/95 to 95/5;
     the mixed resin has a biomass degree of 5% or more as measured according to ASTM D 6866;
     the expanded bead has a crystal structure where a melting peak intrinsic to the linear low-density polyethylene, intrinsic peak, and at least one melting peak on a higher temperature side than the intrinsic peak, high-temperature peak, appear on a DSC curve drawn by heating the expanded bead from 23°C to 200°C at a heating rate of 10°C/min; and
     a heat of fusion at the high-temperature peak is 10 J/g or more and 50 J/g or less.

2.  The method for producing expanded beads according to claim 1, wherein the linear low-density polyethylene B has a biomass degree of 20% or less as measured according to ASTM D 6866.

3.  The method for producing expanded beads according to claim 1 or 2, wherein a difference $\rho_B$ - $\rho_A$ between a density $\rho_B$ of the linear low-density polyethylene B and a density $\rho_A$ of the linear low-density polyethylene A is 3 kg/m$^3$ or more, and the mixed resin has a density of 910 kg/m$^3$ or more and 928 kg/m$^3$ or less.

4.  The method for producing expanded beads according to any one of claims 1 to 3, wherein a difference $\Delta H_B$- $\Delta H_A$ between a heat of fusion $\Delta H_B$ of the linear low-density polyethylene B and a heat of fusion $\Delta H_A$ of the linear low-density polyethylene A is 3 J/g or more, and a total heat of fusion of the mixed resin is 70 J/g or more and 120 J/g or less.

5.  The method for producing expanded beads according to any one of claims 1 to 4, wherein a total heat of fusion of the expanded bead is 70 J/g or more and 105 J/g or less, and a ratio of the heat of fusion at the high-temperature peak to the total heat of fusion of the expanded bead is 0.2 or more and 0.7 or less.

6.  The method for producing expanded beads according to any one of claims 1 to 5, wherein a melt flow rate of the mixed resin measured under conditions of a temperature of 190°C and a load of 2.16 kg is 0.1 g/10 min or more and 3 g/10 min or less.

7.  The method for producing expanded beads according to any one of claims 1 to 6, wherein the linear low-density polyethylene A comprises a butene component and a hexene component as copolymerization components.

8.  An expanded bead having a bulk density of 10 kg/m$^3$ or more and 240 kg/m$^3$ or less, comprising a mixed resin of at least two linear low-density polyethylenes as a base resin, wherein

     the mixed resin has a density of 910 kg/m$^3$ or more and 928 kg/m$^3$ or less;
     the expanded bead has a biomass degree of 5% or more as measured according to ASTM D 6866;

a melt flow rate of the expanded bead measured under conditions of a temperature of 190°C and a load of 2.16 kg is 0.1 g/10 min or more and 3 g/10 min or less;

the expanded bead has a crystal structure where a melting peak intrinsic to the linear low-density polyethylene, intrinsic peak, and at least one melting peak on a higher temperature side than the intrinsic peak, high-temperature peak, appear on a DSC curve drawn by heating the expanded bead from 23°C to 200°C at a heating rate of 10°C/min; and

a heat of fusion at the high-temperature peak is 10 J/g or more and 50 J/g or less.

9. The expanded bead according to claim 8, wherein a total heat of fusion of the expanded bead is 70 J/g or more and 105 J/g or less, and a ratio of the heat of fusion at the high-temperature peak to the total heat of fusion of the expanded bead is 0.2 or more and 0.7 or less.

## INTERNATIONAL SEARCH REPORT

| International application No. |
|---|
| **PCT/JP2023/007330** |

### A. CLASSIFICATION OF SUBJECT MATTER

*C08J 9/16*(2006.01)i; *B29C 44/44*(2006.01)i; *B29K 23/00*(2006.01)n
FI: C08J9/16 CES; B29C44/44; B29K23:00

According to International Patent Classification (IPC) or to both national classification and IPC

### B. FIELDS SEARCHED

Minimum documentation searched (classification system followed by classification symbols)

C08J9/00-9/42; B29C44/00-44/60;C08L23/06; B29K23/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 11-172034 A (KANEGAFUCHI CHEM IND CO LTD) 29 June 1999 (1999-06-29) entire text, in particular, claims | 1-9 |
| A | JP 7-216153 A (SUMITOMO CHEM CO LTD) 15 August 1995 (1995-08-15) entire text, in particular, claims | 1-9 |
| A | JP 2013-060514 A (SEKISUI PLASTICS CO LTD) 04 April 2013 (2013-04-04) entire text, in particular, claims, paragraph [0028] | 1-9 |
| A | JP 2020-090609 A (JSP CORP) 11 June 2020 (2020-06-11) entire text | 1-9 |
| P, A | JP 7227526 B1 (JSP CORP) 22 February 2023 (2023-02-22) entire text | 1-9 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/007330**

| Patent document cited in search report | | | Publication date (day/month/year) | Patent family member(s) | | | Publication date (day/month/year) |
|---|---|---|---|---|---|---|---|
| JP | 11-172034 | A | 29 June 1999 | US entire text, in particular, claims EP MY | 5942551 924244 115407 | A A2 A | |
| JP | 7-216153 | A | 15 August 1995 | (Family: none) | | | |
| JP | 2013-060514 | A | 04 April 2013 | (Family: none) | | | |
| JP | 2020-090609 | A | 11 June 2020 | (Family: none) | | | |
| JP | 7227526 | B1 | 22 February 2023 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013060514 A
- JP S51022951 B
- JP H04046217 B
- JP H06049795 B
- JP H06022919 B